# EUROPÄISCHE PATENTSCHRIFT

(11) **EP 3 924 145 B1**
(45) Veröffentlichungstag und Bekanntmachung des Hinweises auf die Patenterteilung: **27.11.2024**
(21) Anmeldenummer: 19832017.8
(22) Anmeldetag: 13.12.2019
(51) Int. Cl.: B23Q 7/10, B23Q 7/04

(54) **WERKZEUGMASCHINE**
MACHINE TOOL
MACHINE-OUTIL

(30) Priorität: 11.02.2019 DE 102019201750
(43) Veröffentlichungstag der Anmeldung: 22.12.2021
(73) Patentinhaber: DMG MORI Pfronten GmbH, 87459 Pfronten (DE)
(72) Erfinder: JUNG, Robert, 87459 Pfronten (DE)
(74) Vertreter: MERH-IP Matias Erny Reichl Hoffmann Patentanwälte PartG mbB
(86) Internationale Anmeldenummer: PCT/EP2019/085072
(87) Internationale Veröffentlichungsnummer: WO 2020/164780

(56) Entgegenhaltungen:
- DE-A1- 102007 036 270
- DE-A1- 102009 011 675
- DE-B4- 102009 011 675
- US-A1- 2002 006 764
- US-A1- 2007 289 115

## Beschreibung

Die vorliegende Erfindung betrifft eine Werkzeugmaschine.

### HINTERGRUND DER ERFINDUNG

Automatische Wechselvorgänge in einer Werkzeugmaschine, insbesondere bei dem Wechsel von Werkzeugen, die in einer Arbeitsspindel der Werkzeugmaschine aufgenommen sind, sind eine weit verbreitete Möglichkeit, den Automatisierungsgrad einer Werkzeugmaschine und die darin stattfindenden Bearbeitungsprozesse zu erhöhen; sie gehören damit im Wesentlichen zum bekannten Stand der Technik. Eine solche Werkzeugmaschine ist zum Beispiel aus der US 2002/006764 A1 bekannt.

Jedoch sind Weiterentwicklungen im Bereich der automatischen Wechselvorgänge und Verbesserungen bestehender Systeme gewünscht, insbesondere auch im Hinblick auf das Wechseln von Werkstücken, die auf einem Maschinentisch der Werkzeugmaschine eingespannt sind bzw. eingespannt werden sollen.

Hierbei wird stets angestrebt, dass die Werkzeugmaschinen schnelle Wechselzeiten und geringen Standzeiten bei den Wechselvorgängen ermöglichen. Dabei sollten die Werkzeugmaschinen weiterhin sowohl eine kompakte Bauweise aufweisen, als auch eine große Anzahl an Werkzeugen bzw. Werkstücken in entsprechenden Speicherstellen, wie beispielsweise Magazinen, für die anstehenden Bearbeitungsprozesse vorhalten können.

### ZUSAMMENFASSUNG DER ERFINDUNG

Eine Aufgabe der vorliegenden Erfindung ist es eine Werkzeugmaschine mit verbesserten Automationseigenschaften und gleichzeitig kompakter Bauweise bereitzustellen.

Zur Lösung dieser Aufgabe wird eine Werkzeugmaschine nach Anspruch 1 vorgeschlagen. Die abhängigen Ansprüche beziehen sich auf vorteilhafte Ausführungsbeispiele der erfindungsgemäßen Werkzeugmaschine.

Die erfindungsgemäße Werkzeugmaschine weist auf: einen um eine Schwenkachse schwenkbaren Maschinentisch zum Einspannen eines Werkstücks, ein Werkstück-Magazin mit einer Vielzahl von Magazinplätzen zur Aufnahme jeweiliger Werkstücke, und eine Werkstück-Wechseleinrichtung zum Ein- bzw. Auswechseln eines Werkstücks an dem Maschinentisch, wobei der schwenkbare Maschinentisch dazu eingerichtet ist, zum Ein- bzw. Auswechseln des Werkstücks an dem Maschinentisch durch die Werkstück-Wechseleinrichtung in eine Wechselposition zu schwenken, und die Werkstück-Wechseleinrichtung dazu eingerichtet ist, das Werkstück an dem in die Wechselposition geschwenkten Maschinentisch ein- bzw. auszuwechseln.

Durch die erfindungsgemäße Werkzeugmaschine konnte in einfacher Weise eine Verbesserung des Automationsgrades erreicht werden, so dass nun Maschinentische, die beispielsweise eine Schwenkachse aufweisen, durch eine Werkstück-Wechseleinrichtung automatisch bestückt werden können.

Hierfür ist es von besonderem Vorteil, wenn die Schwenkachse bewusst in den Wechselprozess des Werkstücks mit einbezogen werden kann, da sich hierdurch deutlich mehr Möglichkeiten für die Werkstück-Wechseleinrichtung ergeben, das Werkstück zu wechseln, auch im Hinblick auf den Faktor Zeit.

Weiterhin ist eine für einen derartigen Werkstückwechsel an einem schwenkbaren Maschinentisch eingerichtete Werkstück-Wechseleinrichtung dahingehend von Vorteil, da diese durch ihren Greiferabschnitt, wie beispielsweise die Gabel eines Gabelwechslers (auch oft genutzt bei Werkzeug-Wechselvorgängen an Arbeitsspindeln), und durch das Vorhandensein verschiedener Antriebe wie Linearachsen, Rotationsantriebe und/oder Hubantriebe in die Lage versetzt wird, in verschiedenen Bewegungsabläufen die an dem Maschinentisch eingespannten Werkstücke zu wechseln und dabei die Wechselvorgänge schnell durchzuführen.

Eine vorteilhafte Weiterbildung der erfindungsgemäßen Werkzeugmaschine liegt darin, dass das Werkstück-Magazin zumindest eine Rotationsachse aufweist, um die herum angeordnet das Werkstück-Magazin eine Vielzahl radial ausgerichteter Magazinplätze zur Aufnahme jeweiliger Werkstücke aufweist.

Ein weiterer Punkt bei derartigen Werkstück-Wechselvorgängen ist zum einen das Vorhandensein eines Werkstück-Magazins und zum anderen die Bauform bzw. charakteristische Merkmale des Magazins. Insbesondere bei Werkstück-Magazinen mit bogenförmig angeordneten und/oder radial angeordneten Magazinplätzen kann es für ein sicheres und zügiges Wechseln des Werkstücks von erheblichen Einfluss sein, welche Positioniermöglichkeiten zum einen die Werkstück-Wechseleinrichtung und zum anderen der Maschinentisch aufweist, damit die drei Komponenten Magazin - Wechsler - Maschinentisch miteinander in vorteilhafter Weise interagieren können.

Zusätzlich können durch radial angeordnete Magazinplätze (wie sie beispielsweise bei Radmagazinen oder auch teilweise bei Kettenmagazinen vorkommen) nun in besonders platzsparender Weise Werkstücke für die automatisierte Ein- bzw. Auswechslung der Werkstücke an dem Maschinentisch bereitgestellt und gespeichert werden.

Weiterhin kann die erfindungsgemäße Werkzeugmaschine dadurch vorteilhaft weitergebildet werden, dass der schwenkbare Maschinentisch eine senkrecht zur Schwenkachse ausgerichtete Einspannvorrichtung zum Einspannen eines Werkstücks aufweist, wobei in der Wechselposition des Maschinentisches die Einspannvorrichtung des Maschinentisches im Wesentlichen parallel und/oder im Wesentlichen gleich orientiert zu einem Magazinplatz des Werkstück-Magazins ausgerichtet ist, aus dem das Werkstück durch die Werkstück-Wechseleinrichtung entnommen und in die Einspannvorrichtung des Maschinentisches eingesetzt wird oder in den das Werkstück aus der Einspannvorrichtung des Maschinentisches durch die Werkstück-Wechseleinrichtung eingesetzt wird.

Hierdurch können nun in vorteilhafter Weise die Werkstücke mit wenigen Verfahrbewegungen seitens der Werkstück-Wechseleinrichtung zwischen der Einspannvorrichtung des Maschinentisches und dem Werkstück-Magazin bewegt und ein- bzw. ausgetauscht werden.

Erfindungsgemäß weist die Werkstück-Wechseleinrichtung einen Greiferabschnitt auf, der zum Greifen des Werkstücks an der Einspannvorrichtung des Maschinentisches und/oder an einem Magazinplatz der Vielzahl von Magazinplätzen des Werkstück-Magazins eingerichtet ist, wobei die Werkstück-Wechseleinrichtung eine Rotationsachse aufweist, um die der Greiferabschnitt rotierbar ist und die beim Greifen des Werkstücks durch den Greiferabschnitt im Wesentlichen parallel zur Ausrichtung der Einspannvorrichtung des Maschinentisches und/oder des entsprechenden Magazinplatzes der Vielzahl von Magazinplätzen des Werkstück-Magazins angeordnet ist.

Hierdurch können nun die Werkstücke einfach durch den Greiferabschnitt der Werkstück-Wechseleinrichtung gegriffen und entsprechend für den Einwechsel- bzw. Austauschvorgang zurecht positioniert werden.

Weiterhin ist die erfindungsgemäße Werkzeugmaschine dadurch so weitergebildet, dass die Werkstück-Wechseleinrichtung das Werkstück einem Magazinplatz der Vielzahl von Magazinplätzen des Werkstück-Magazins entnimmt oder das Werkstück in einem Magazinplatz der Vielzahl von Magazinplätzen des Werkstück-Magazins ablegt, der unterhalb der durch die Rotationsachse des Werkstück-Magazins verlaufenden horizontalen Ebene angeordnet sein kann.

Erfindungsgemäß ist die Rotationsachse der Werkstück-Wechseleinrichtung schräg zwischen einer horizontalen und einer vertikalen Anordnung angeordnet, um die der Greiferabschnitt der Werkstück-Wechseleinrichtung rotierbar ist. Dies kann beispielsweise durch die Länge der zu wechselnden Werkstücke beeinflusst werden, um die optimale Position der Werkstück-Wechseleinrichtung in der Werkzeugmaschine bzw. in Relation zum Werkstück-Magazin zu bestimmen.

Eine weitere vorteilhafte Weiterbildung der erfindungsgemäßen Werkzeugmaschine besteht darin, dass das Werkstück über eine standardisierte Schnittstelle, insbesondere eine HSK-Schnittstelle oder eine Steilkegelschnittstelle, oder eine Benutzer-spezifische Schnittstelle von der Einspannvorrichtung des Maschinentisches und/oder von einem Magazinplatz der Vielzahl von Magazinplätzen des Werkstück-Magazins aufnehmbar ist.

Hierdurch können nun verschiedenste Schnittstellen durch das Werkstück-Magazin bzw. durch die Einspannvorrichtung des Maschinentisches bedient werden und die Werkzeugmaschine so noch flexibler auf die Anforderungen der jeweiligen Bearbeitung anpassen.

Eine weitere vorteilhafte Weiterbildung der erfindungsgemäßen Werkzeugmaschine besteht darin, dass die Werkstück-Wechseleinrichtung über eine Linearachse zwischen dem Werkstück-Magazin und dem schwenkbaren Maschinentisch verfahrbar ist.

Zudem kann die erfindungsgemäße Werkzeugmaschine dadurch vorteilhaft weitergebildet werden, dass die Werkstück-Wechseleinrichtung dazu eingerichtet ist, beim Ein- bzw. Auswechseln des vom Maschinentisch eingespannten Werkstücks den Greiferabschnitt der Werkstück-Wechseleinrichtung für das Greifen des Werkstücks an der Einspannvorrichtung des Maschinentisches zu positionieren, indem die Werkstück-Wechseleinrichtung entlang der Linearachse verfahren wird und gleichzeitig damit begonnen wird, den Greiferabschnitt um die Rotationsachse der Werkstück-Wechseleinrichtung drehend zu positionieren.

Hierdurch ist es der Werkstück-Wechseleinrichtung möglich, das eingespannte Werkstücke in kurzer Zeit ein- bzw. auszuwechseln, indem eine Überlagerung einer linearen Verfahrbewegung und einer rotatorischen Bewegung des Greiferabschnitts der Werkstück-Wechseleinrichtung erfolgt. Insbesondere kann dies dazu genutzt werden, um einen möglichen Höhenversatz zwischen der Rotationsachse der Werkstück-Wechseleinrichtung/des Magazinplatzes des Werkstückmagazins und der Einspannvorrichtung des Maschinentisches auszugleichen, ohne dabei auf eine vertikale Lineareinheit (oder einen ähnlichen, zusätzlichen Bewegungsmechanismus) angewiesen zu sein.

Dies ermöglicht weiterhin eine erhebliche Verbesserung der Automatisierung der Bearbeitung von Werkstücken an Werkzeugmaschinen bzw. an schwenkbaren Maschinentischen. Dabei ist die Bauform der Maschinentische unerheblich und kann zweiseitig gelagerte Maschinentische (beispielsweise mit U-förmiger Brücke oder gerader Brücke) wie aber auch einseitig gelagerte Maschinentische umfassen, wie sie beispielsweise in den Patentschriften DE 10 2004 049 525 B3 und DE 10 2012 201 736 B3 beschrieben sind.

Zudem kann die erfindungsgemäße Werkzeugmaschine dadurch vorteilhaft weitergebildet werden, dass der schwenkbare Maschinentisch als Schwenkrundtisch ausgebildet ist.

Durch die Möglichkeit, zusätzlich eine die Lage des Werkstücks verändernde Positionierung durchführen zu können erweitern sich die Einsatzmöglichkeiten des Maschinentisches enorm, so dass zum einen deutlich komplexere Geometrien des Werkstücks in einer Aufspannung erzeugt werden können (insbesondere in Verbindung mit der Nutzung der Schwenkachse des schwenkbaren Maschinentisches).

Ferner kann die erfindungsgemäße Werkzeugmaschine dadurch vorteilhaft weitergebildet werden, dass der schwenkbare Maschinentisch eine senkrecht zur Schwenkachse ausgerichtete Drehachse aufweist, um die herum die Einspannvorrichtung des Maschinentisches zum Einspannen des Werkstücks drehbar ist, und der Maschinentisch dazu eingerichtet ist, die Einspannvorrichtung des Maschinentisches drehend zu positionieren, um ein Greifen des von der Einspannvorrichtung des Maschinentisches eingespannten Werkstücks durch den Greiferabschnitt der Werkstück-Wechseleinrichtung zu ermöglichen.

Hierdurch ist es nun möglich, dass der Greifer unterschiedlichste Werkstücke bzw. Schnittstellen, über die das Werkstück an dem Maschinentisch eingespannt werden können, zu greifen, da diese teilweise eine definierte relative Lage gegenüber dem Greifer bzw. Greiferabschnitt benötigen, damit sie von der Werkstück-Wechseleinrichtung (insbesondere von dem Greiferabschnitt) für einen Werkstück-Wechsel gegriffen werden können.

Weiterhin kann die erfindungsgemäße Werkzeugmaschine dadurch vorteilhaft weitergebildet werden, dass der Maschinentisch dazu eingerichtet ist, die Einspannvorrichtung des Maschinentisches in Abhängigkeit der Schnittstelle des Werkstücks, über die das Werkstück von der Einspannvorrichtung des Maschinentisches und/oder von einem Magazinplatz der Vielzahl von Magazinplätzen des Werkstück-Magazins aufnehmbar ist, drehend zu positionieren, um ein Greifen des von der Einspannvorrichtung des Maschinentisches eingespannten Werkstücks durch den Greiferabschnitt der Werkstück-Wechseleinrichtung zu ermöglichen, oder der Maschinentisch dazu eingerichtet ist, die Einspannvorrichtung des Maschinentisches in Abhängigkeit der Schnittstelle des Werkstücks, über die das Werkstück von der Einspannvorrichtung des Maschinentisches und/oder von einem Magazinplatz der Vielzahl von Magazinplätzen des Werkstück-Magazins aufnehmbar ist, und in Abhängigkeit zu der relativen Lage der Schnittstelle zu dem Greiferabschnitt der Werkstück-Wechseleinrichtung drehend zu positionieren, um ein Greifen des von der Einspannvorrichtung des Maschinentisches eingespannten Werkstücks durch den Greiferabschnitt der Werkstück-Wechseleinrichtung zu ermöglichen.

Eine vorteilhafte Weiterbildung der erfindungsgemäßen Werkzeugmaschine besteht zudem darin, dass die Werkstück-Wechseleinrichtung eine Vertikalachse aufweist, die zum vertikalen Verfahren des Greiferabschnitts und der Rotationsachse der Werkstück-Wechseleinrichtung eingerichtet ist, wobei beim Wechsel des am Maschinentisch eingespannten Werkstücks die Werkstück-Wechseleinrichtung dazu eingerichtet ist, für das Greifen des Werkstücks an der Einspannvorrichtung des Maschinentisches den Greiferabschnitt und die Rotationsachse der Werkstück-Wechseleinrichtung entlang der Vertikalachse zu verfahren, um ein Greifen des von der Einspannvorrichtung des Maschinentisches eingespannten Werkstücks durch den Greiferabschnitt der Werkstück-Wechseleinrichtung zu ermöglichen.

Dies ermöglicht in vorteilhafter Weise, dass eine Positionierung der Werkstück-Wechseleinrichtung (insbesondere des Greiferabschnitts) zu dem an dem Maschinentisch eingespannten Werkstück auf vielfältige Weise Möglich ist, was je nach verwendetem Typ des Maschinentisches vorteilhaft sein kann. Insbesondere können hierdurch ganz verschiedene Kombinationen von Positionierbewegungen erzeugt werden, um den Wechselprozess des Werkstücks zu unterstützen bzw. überhaupt erst zu ermöglichen.

Zudem kann die erfindungsgemäße Werkzeugmaschine dadurch vorteilhaft weitergebildet werden, dass der Greiferabschnitt einen ansteuerbaren Hubmechanismus aufweist, durch den der Greiferabschnitt in Richtung der Rotationsachse der Werkstück-Wechseleinrichtung translatorisch bewegbar ist, so dass das Werkstück aus der Einspannvorrichtung des Maschinentisches und/oder aus dem entsprechenden Magazinplatz der Vielzahl von Magazinplätzen des Werkstück-Magazins entnehmbar ist und/oder das Werkstück in die Einspannvorrichtung des Maschinentisches und/oder in den entsprechenden Magazinplatz der Vielzahl von Magazinplätzen des Werkstück-Magazins einsetzbar ist.

Weiterhin kann die erfindungsgemäße Werkzeugmaschine dadurch vorteilhaft weitergebildet werden, dass das Werkstück-Magazin mindestens einen Werkstück-Magazinabschnitt, bevorzugt mehrere Werkstück-Magazinabschnitte aufweist, die im Wesentlichen um die Rotationsachse des Werkstück-Magazins drehbar sind und die jeweils eine Vielzahl radial ausgerichteter Magazinplätze zur Aufnahme jeweiliger Werkstücke aufweisen.

Hierdurch besteht die Möglichkeit, das Werkstück-Magazin auf die vielfältigste Art und Weise zu nutzen: Beispielsweise kann für jedes Werkstück-magazinabschnitt ein anderes Rohteil als Werkstück vorgesehen sein, oder aber ein Teil der Werkstück-Magazinabschnitten speichern die Rohteile, während die anderen Werkstück-Magazinabschnitte die fertig bearbeiteten Werkstücke speichern. Den Möglichkeiten, die Werkstück-Magazinabschnitte auf unterschiedlichste Weise zu nutzen, sind dabei keine Grenzen gesetzt.

Insbesondere kann die erfindungsgemäße Werkzeugmaschine dadurch vorteilhaft weitergebildet werden, dass das Werkstück-Magazin als Radmagazin ausgebildet ist.

Ein Radmagazin bzw. mehrere Radmagazinabschnitte sind insbesondere dahingehend von Vorteil, da sie eine sehr schnelle Bereitstellung des gewünschten Werkstücks ermöglichen und dabei auf vergleichsweise geringem Platz eine hohe Zahl an Werkstücken speichern können.

Durch die erfindungsgemäße Werkzeugmaschine konnte in einfacher Weise eine Verbesserung des Automationsgrades erreicht werden, so dass nun Maschinentische, die beispielsweise eine Schwenkachse aufweisen, durch eine Werkstück-Wechseleinrichtung automatisch bestückt werden können. Hierfür ist es besonders vorteilhaft, dass die Schwenkachse bewusst in den Wechselprozess des Werkstücks mit einbezogen werden konnte, da sich hierdurch deutlich mehr Möglichkeiten für die Werkstück-Wechseleinrichtung ergeben, das Werkstück zu wechseln, auch im Hinblick auf den Faktor Zeit.

Weiterhin ist eine für einen derartigen Werkstückwechsel an einem schwenkbaren Maschinentisch eingerichtete Werkstück-Wechseleinrichtung dahingehend von Vorteil, da diese durch ihren Greiferabschnitt, wie beispielsweise die Gabel eines Gabelwechslers (auch oft genutzt bei Werkzeug-Wechselvorgängen an Arbeitsspindeln), und durch das Vorhandensein verschiedener Antriebe wie Linearachsen, Rotationsantriebe und/oder Hubantriebe in die Lage versetzt wird, in verschiedenen Bewegungsabläufen die an dem Maschinentisch eingespannten Werkstücke zu wechseln und dabei die Wechselvorgänge schnell durchzuführen.

Beispielhaft wird ein Verfahren zum Wechseln eines Werkstücks an einer Werkzeugmaschine beschrieben, wobei die Werkzeugmaschine einen um eine Schwenkachse schwenkbaren Maschinentisch zum Einspannen des Werkstücks, ein Werkstück-Magazin mit einer Vielzahl von Magazinplätzen zur Aufnahme jeweiliger Werkstücke, und eine Werkstück-Wechseleinrichtung zum Ein- bzw. Auswechseln des Werkstücks an dem Maschinentisch aufweist, wobei das Verfahren aufweist: Schwenken des schwenkbaren Maschinentisches in eine Wechselposition zum Ein- bzw. Auswechseln des Werkstücks an dem Maschinentisch, und Ein- bzw. Auswechseln des Werkstücks an dem in die Wechselposition geschwenkten Maschinentisch durch die Werkstück-Wechseleinrichtung.

Dieses beispielhafte Verfahren kann zudem dadurch angepasst werden, dass das Werkstück-Magazin zumindest eine Rotationsachse aufweist, um die herum angeordnet das Werkstück-Magazin eine Vielzahl radial ausgerichteter Magazinplätze zur Aufnahme jeweiliger Werkstücke aufweist.

Dieses beispielhafte Verfahren kann weiterhin dadurch angepasst werden, dass der schwenkbare Maschinentisch eine senkrecht zur Schwenkachse ausgerichtete Einspannvorrichtung zum Einspannen eines Werkstücks aufweist, wobei in der Wechselposition des Maschinentisches die Einspannvorrichtung des Maschinentisches im Wesentlichen parallel und/oder im Wesentlichen gleich orientiert zu einem Magazinplatz der Vielzahl radial ausgerichteter Magazinplätze des Werkstück-Magazins ausgerichtet ist, aus dem das Werkstück durch die Werkstück-Wechseleinrichtung entnommen und in die Einspannvorrichtung des Maschinentisches eingesetzt wird oder in den das Werkstück aus der Einspannvorrichtung des Maschinentisches durch die Werkstück-Wechseleinrichtung eingesetzt wird.

Dieses beispielhafte Verfahren kann zudem dadurch angepasst werden, dass die Werkstück-Wechseleinrichtung über eine Linearachse zwischen dem Werkstück-Magazin und dem schwenkbaren Maschinentisch verfahrbar ist, und der schwenkbare Maschinentisch im Wesentlichen U-förmig ausgebildet ist, wobei die Schwenkachse des Maschinentisches an dem offenen Ende des im Wesentlichen U-förmigen Maschinentisches angeordnet ist und das Werkstück an dem dem offenen Ende gegenüberliegenden Abschnitt des im Wesentlichen U-förmigen Maschinentisches eingespannt wird, wobei das beispielhafte Verfahren nunmehr aufweist: Positionieren eines Greiferabschnitts der Werkstück-Wechseleinrichtung für das Greifen des Werkstücks an der Einspannvorrichtung des Maschinentisches in den Bereich zwischen den beiden Schenkeln des im Wesentlichen U-förmigen Maschinentisches durch: Verfahren der Werkstück-Wechseleinrichtung entlang der Linearachse zu dem in der Wechselposition geschwenkten Maschinentisch, und gleichzeitiges Beginnen des Drehens des Greiferabschnitts der Werkstück-Wechseleinrichtung um eine Rotationsachse der Werkstück-Wechseleinrichtung, wobei die Rotationsachse der Werkstück-Wechseleinrichtung im Wesentlichen parallel zur Ausrichtung der Einspannvorrichtung des Maschinentisches und/oder des entsprechenden Magazinplatzes der Vielzahl radial ausgerichteter Magazinplätze des Werkstück-Magazins angeordnet ist.

Dieses beispielhafte Verfahren kann zudem dadurch angepasst werden, dass die Werkstück-Wechseleinrichtung eine Vertikalachse aufweist, die zum vertikalen Verfahren des Greiferabschnitts und der Rotationsachse der Werkstück-Wechseleinrichtung eingerichtet ist, wobei beim Wechsel des am Maschinentisch eingespannten Werkstücks die Werkstück-Wechseleinrichtung dazu eingerichtet ist, für das Greifen des Werkstücks an der Einspannvorrichtung des Maschinentisches den Greiferabschnitt und die Rotationsachse der Werkstück-Wechseleinrichtung entlang der Vertikalachse zu verfahren, um ein Greifen des von der Einspannvorrichtung des Maschinentisches eingespannten Werkstücks durch den Greiferabschnitt der Werkstück-Wechseleinrichtung zu ermöglichen.

Weitere Aspekte und deren Vorteile als auch Vorteile und speziellere Ausführungsmöglichkeiten der vorstehend beschriebenen Aspekte und Merkmale werden aus den folgenden, jedoch in keinster Weise einschränkend aufzufassenden Beschreibungen und Erläuterungen zu den angehängten Figuren beschrieben.

### KURZBESCHREIBUNG DER FIGUREN

- Fig. 1: zeigt schematisch eine Ausführungsform einer Werkzeugmaschine in Fahrständerbauweise mit vertikal angeordneter Arbeitsspindel und schwenkbarem Maschinentisch;
- Fig. 2: zeigt schematisch eine weitere Ausführungsform einer Werkzeugmaschine als Horizontalbearbeitungsmaschine mit horizontal angeordneter Arbeitsspindel und schwenkbarem Maschinentisch;
- Fig. 3: zeigt schematisch eine Ausführungsform der erfindungsgemäßen Werkzeugmaschine in Fahrständerbauweise mit vertikal angeordneter Arbeitsspindel, schwenkbarem Maschinentisch und schräg angeordneter Werkstück-Wechseleinrichtung;
- Fig. 4: zeigt schematisch eine weitere Ausführungsform einer Werkzeugmaschine als Horizontalbearbeitungsmaschine mit horizontal angeordneter Arbeitsspindel, schwenkbarem Maschinentisch und unterhalb eines Werkstück-Magazins angeordneter Werkstück-Wechseleinrichtung;
- Fig. 5: zeigt schematisch eine weitere Ausführungsform einer Werkzeugmaschine in Fahrständerbauweise mit einer Abtrennung des Arbeitsraums der Werkzeugmaschine von dem Werkstück-Magazin und der Werkstück-Wechseleinrichtung;
- Fig. 6: zeigt schematisch eine weitere Ausführungsform einer Werkzeugmaschine in Fahrständerbauweise und einem Werkstück-Magazin mit mehreren Werkstück-Magazinabschnitten;
- Fig. 7: zeigt schematisch verschiedene Kombinationen von Bewegungen einer Werkstück-Wechseleinrichtung und eines Maschinentisches zum Greifen des an dem Maschinentisch eingespannten Werkstücks durch den Greiferabschnitt der Werkstück-Wechseleinrichtung;
- Fig. 8: zeigt schematisch eine weitere Ausführungsform einer Werkstück-Wechseleinrichtung mit weiterer Bewegung zum Ein- bzw. Auswechseln des an dem Maschinentisch eingespannten Werkstücks;
- Fig. 9: zeigt schematisch verschiedene Varianten von Werkstückträgern mit verschiedenen Schnittstellen.

### DETAILLIERTE BESCHREIBUNG DER FIGUREN UNDBEVORZUGTER AUSFÜHRUNGSBEISPIELE DER VORLIEGENDEN ERFINDUNG

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein, manchmal allerdings auch mit unterschiedlichen Bezugszeichen.

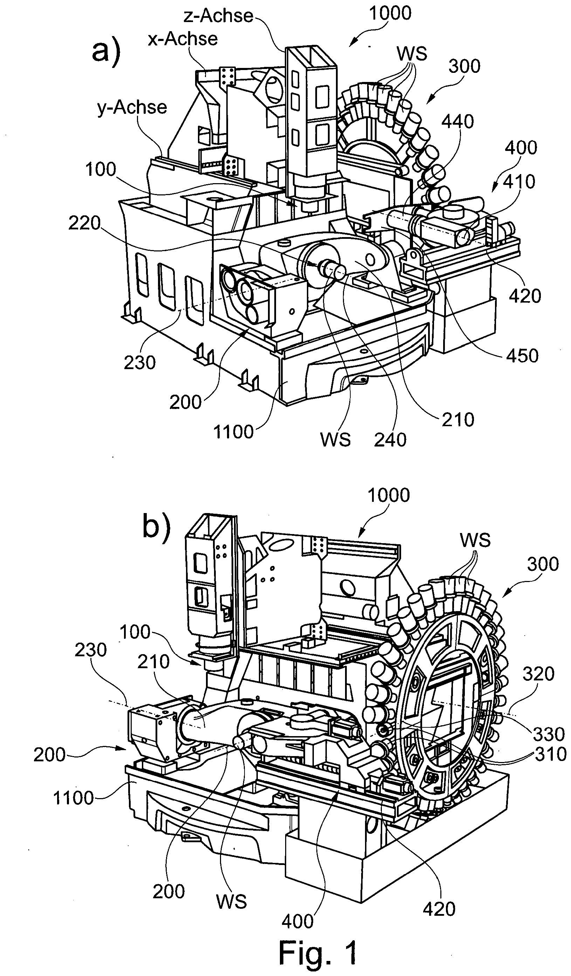

Fig. 1 zeigt schematisch eine Ausführungsform einer Werkzeugmaschine 1000 in Fahrständerbauweise mit vertikal angeordneter Arbeitsspindel 100 und schwenkbarem Maschinentisch 200.

Dabei zeigt Fig. 1 eine Werkzeugmaschine 1000 in zwei Ansichten (hier Ansicht a) und Ansicht b)), um die Konfiguration und die Eigenschaften der erfindungsgemäßen Werkzeugmaschine 1000 besser erklären zu können.

Ansicht a) zeigt neben der Arbeitsspindel 100, die entlang der x-, der y- und der z-Achse zugestellt werden kann, dem Maschinenbett 1100 und dem schwenkbaren Maschinentisch 200 noch ein Werkstückmagazin 300 (hier im konkreten Fall ein Radmagazin, was aber nicht als einschränkend aufzufassen ist, da es beispielsweise ebenfalls ein Kettenmagazin oder vergleichbares sein kann) und eine Werkstück-Wechseleinrichtung 400.

Die Werkstück-Wechseleinrichtung 400 weist eine Linearachse 420 und einen Greiferabschnitt 450 auf, der um eine Rotationsachse 410 der Werkstück-Wechseleinrichtung 400 drehbar ist. Der Greiferabschnitt 450 ist in der gezeigten Ausführungsform als Gabelgreifer ausgeführt, jedoch ist auch dieses wieder nicht als Einschränkung zu verstehen, es können auch noch andere Bauformen wie beispielsweise ein Hakengreifer als Greiferabschnitt vorgesehen sein.

Die Linearachse 420 ist, wie gezeigt, als spindelgetriebene Verfahreinheit ausgebildet und ermöglicht so ein sehr schnelles und präzises Positionieren der darauf verfahrenen Wechsler-Einheit (aufweisend den Greiferabschnitt 450, die Rotationsachse 410 und eine Hubeinheit 440 zur Positionierung des Greiferabschnitts 450 entlang der Rotationsachse 410).

Der schwenkbare Maschinentisch 200 weist einen im Wesentlichen U-förmigen Träger 210 auf, der über eine Schwenkachse 230 in verschiedene Positionen geschwenkt werden kann, wobei die in den Ansichten a) und b) dargestellte Position die Wechselposition verdeutlicht, in der der schwenkbare Maschinentisch 200 bzw. der im Wesentlichen U-förmige Träger 210 geschwenkt wird, damit die Werkstück-Wechseleinrichtung 400 mit dem schwenkbaren Maschinentisch interagieren kann und das von dem Maschinentisch 200 aufgenommene bzw. eingespannte Werkstück WS ein- bzw. auszuwechseln kann.

Es sei an dieser Stelle aber noch einmal darauf hingewiesen, dass neben einem schwenkbaren U-förmigen Maschinentisch 200 auch diverse andere Formen von Schwenktischen/Schwenkrundtischen verwendet werden, können. Beispielsweise kann der Maschinentisch zweiseitig gelagert sein, unerheblich dabei ob der Träger (Brücke) U-förmig ist oder beispielsweise gerade ausgeführt ist.

Ferner können aber ebenso einseitig gelagerte Maschinentische in der Werkzeugmaschine 1000 vorgesehen sein, wie sie beispielsweise in den Patentschriften DE 10 2004 049 525 B3 und DE 10 2012 201 736 B3 beschrieben sind. Diese können ebenfalls in eine entsprechende Wechselposition mittels ihrer Schwenkachse geschwenkt werden und so durch die Werkstück-Wechseleinrichtung 400 mit Werkstücken WS bestückt werden.

Daher ist der beispielhaft gewählte U-förmige Maschinentisch 200 nicht als Einschränkung zu verstehen. Auch die genannten oder nun folgend beschriebenen Konfigurationen des Maschinentisches 200 können ebenfalls an anderen Maschinentischen (zweiseitig/einseitig gelagert; gerade, U-förmige oder L-förmige Träger 210) angewendet werden/vorgesehen sein.

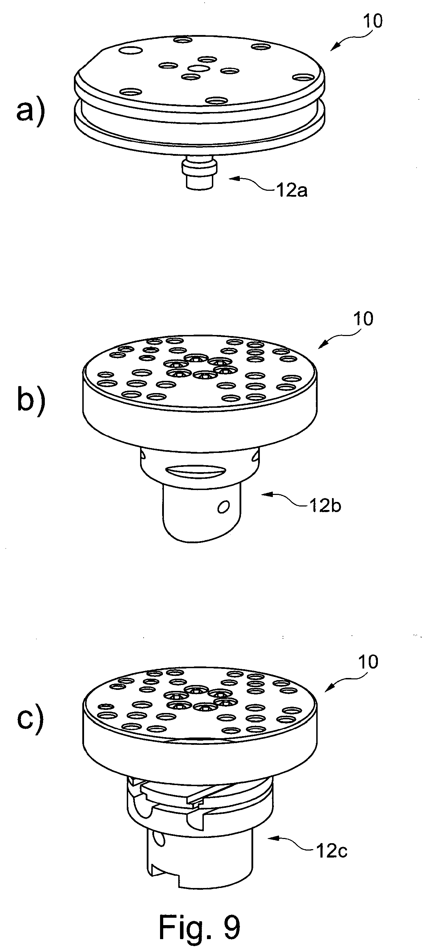

Der schwenkbare Maschinentisch 200 kann zudem eine Einspannvorrichtung 220 aufweisen, die um eine Drehachse 240 drehend positionierbar ist, so dass ebenfalls das eingespannte Werkstück WS und/oder gegebenenfalls auch ein Werkstückträger 10 (Palette) mit einer vorhandenen Schnittstelle 12a, 12b, 12c (hier nicht gezeigt, siehe hierfür Fig. 9), welche das Einspannen des Werkstücks WS in der Einspannvorrichtung 220 erst ermöglichen könnte, drehbar positioniert werden kann.

Ansicht b) zeigt nun noch etwas genauer das Werkstück-Magazin 300, das eine Vielzahl an Magazinplätzen 310 aufweist, um entsprechend Werkstücke WS aufzunehmen. Dabei können von dem Werkstück-Magazin 300 sowohl komplette Rohlinge, also gänzlich unbearbeitete Werkstücke WS aufgenommen werden, oder aber bereits durch eine andere Werkzeugmaschine oder in einem vorangegangenen Bearbeitungsschritt bearbeitete Werkstücke WS aufnehmen.

Für die Bereitstellung des jeweils benötigten Werkstücks WS oder Magazinplatzes 310 in eine Wechselposition, in der das Werkstück-Magazin 300 mit der Werkstück-Wechseleinrichtung 400 interagieren kann, kann das Werkstück-Magazin 300 um eine Rotationsachse 320 drehbar positioniert werden. Dies ermöglicht erst ein Greifen (und Herausnehmen) des gewünschten Werkstücks WS an dem Werkstück-Magazin 300 durch den Greiferabschnitt 450 der Werkstück-Wechseleinrichtung 400 oder ein Ablegen des von dem Greiferabschnitt 450 getragenen Werkstücks WS an dem entsprechenden Magazinplatz 310.

Weiterhin kann eine definierte und reproduzierbare Wechselposition des Werkstück-Magazins 300 auch daher erforderlich sein, dass ein reibungsloses Greifen des Werkstücks WS durch den Greiferabschnitt 450 erfolgen kann, insbesondere bei Schnittstellen (die beispielsweise durch den Greiferabschnitt 450 gegriffen werden können) wie sie in Fig. 9 b) gezeigt sind. Derartige Schnittstellen benötigen eine bestimmte relative Lage zum Greiferabschnitt 450, um gegriffen werden zu können. Ist dies nicht der Fall, kann es zum Verkanten oder in schlimmeren Fällen sogar zur Beschädigung des Werkstücks WS, der Schnittstelle (hier beispielsweise 12b), des Greiferabschnitts 450 und/oder gar des Werkstück-Magazins 300 kommen.

Daher ist es auch für derartige Werkstück-Wechselvorgänge, wie sie die erfindungsgemäße Werkzeugmaschine 1000 durchführt, wichtig, dass eine sehr präzise Ausrichtung des entsprechenden Magazinplatzes 310 des Werkstück-Magazins 300, des Greiferabschnitts 450 der Werkstück-Wechseleinrichtung 400 und der Einspannvorrichtung 220 des schwenkbaren Maschinentisches 200 (bzw. des Maschinentisches 200 selbst oder seines Trägers 210) zueinander erfolgt.

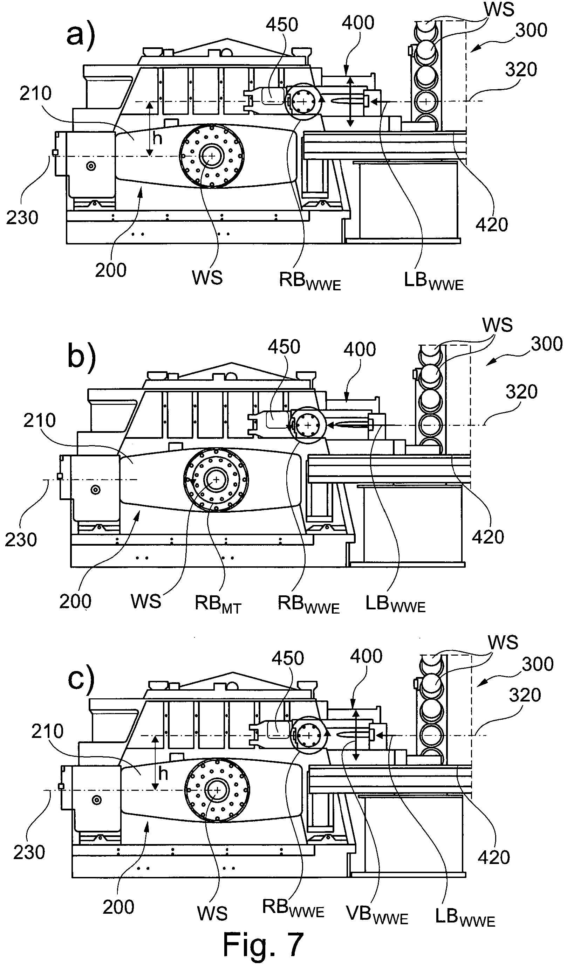

Aus diesem Grund sind der entsprechende Magazinplatz 310 (Ausrichtung 330), die Rotationsachse 410 des Greiferabschnitts 450 und die Einspannvorrichtung 220 (durch Drehachse 240 verdeutlicht) bei einem Ein- bzw. Auswechseln des Werkstücks WS an dem Maschinentisch 200 im Wesentlichen parallel zueinander ausgerichtet (wie dies beispielsweise auch in Fig. 7 verdeutlicht ist), wobei der entsprechende Magazinplatz 310 und die Einspannvorrichtung 220 sogar gleich orientiert sein können, aber nicht müssen, was abhängig vom Aufbau der Werkzeugmaschine 1000 und/oder abhängig von den verfügbaren Freiheitsgraden der Werkstück-Wechseleinrichtung 400 sein kann.

Dabei wird unter gleicher Orientierung (mit Parallelität) von Magazinplatz 310 und Einspannvorrichtung 220 gesprochen, wenn das Werkstück WS (und beispielsweise ein Hohlschaftkegel als Schnittstelle 12c (siehe hierfür Fig. 9)) in den entsprechenden Magazinplatz 310 und in der Einspannvorrichtung 220 eingesetzt werden kann, wenn das Werkstück WS (und die Schnittstelle 12c) dabei entlang der drei Raumrichtungen (x-, y-, z-Richtung) verschoben und gegebenenfalls im die Rotationssymmetrieachse des Hohlschaftkegels gedreht wird.

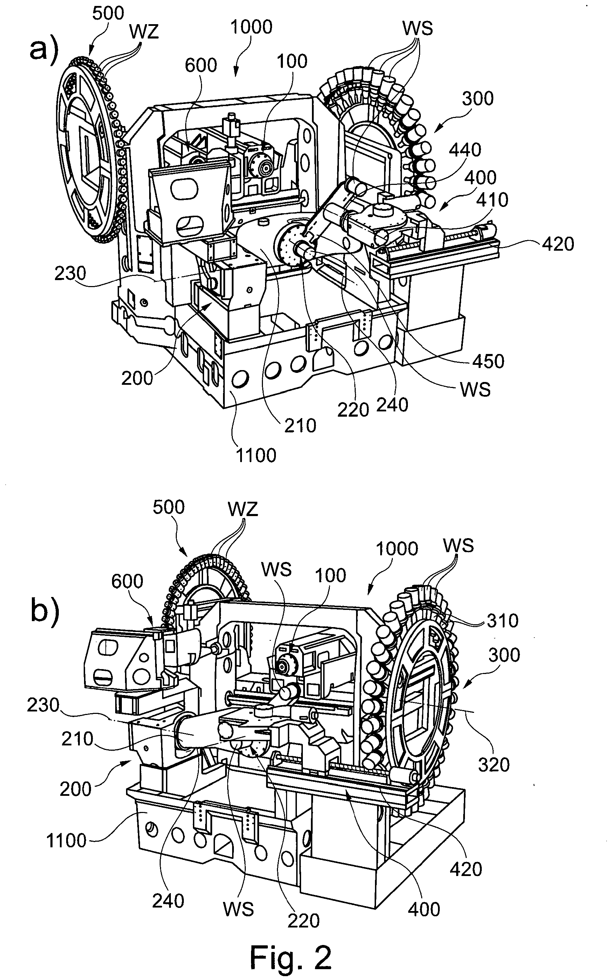

Fig. 2 zeigt schematisch eine weitere Ausführungsform einer Werkzeugmaschine 1000 als Horizontalbearbeitungsmaschine mit horizontal angeordneter Arbeitsspindel 100 und schwenkbarem Maschinentisch 200.

Dabei ist die gezeigte Konfiguration des Maschinentisches 200 auf dem Maschinenbett 1100, des Werkstück-Magazins 300 und der Werkstück-Wechseleinrichtung 400 mit Hubeinheit 440 im Wesentlichen gleich zu der in Fig. 1 gezeigten und bereits beschriebenen Konfiguration. Lediglich die Lage der Arbeitsspindel 100 hat sich von einer vertikalen Anordnung in eine horizontale Anordnung geändert, was verdeutlichen soll, dass die Erfindung auch an verschiedenen Bauformen von Werkzeugmaschinen Anwendung finden kann.

Zudem umfasst die Werkzeugmaschine 1000 in Fig. 2 weiterhin ein Werkzeug-Magazin 500 sowie eine Werkzeug-Wechseleinrichtung 600, die aber im Wesentlichen vergleichbar ausgestaltet sind wie das Werkstück-Magazin 300 und die Werkstück-Wechseleinrichtung 400. An dieser Stelle sei darauf hingewiesen, dass ein Werkzeug-Magazin 500 und ein entsprechender Werkzeug-Wechsler 600 ebenfalls in der Werkzeugmaschine 1000 nach Fig. 1 verwendet werden kann, nur eventuell aufgrund der geänderten Lage der Arbeitsspindel 100 entsprechend auch in geänderter Lage zum Werkzeug-Magazin 500.

Des Weiteren sei an dieser Stelle darauf hingewiesen, dass es durchaus möglich ist, das Werkstück-Magazin 300 mit Werkzeugen WZ zu bestücken und das Werkzeug-Magazin 500 mit Werkstücken WS zu bestücken, so dass das zu bearbeitende Werkstück WS von der Arbeitsspindel 100 aufgenommen werden kann und das Werkzeug WZ von dem schwenkbaren Maschinentisch 200 aufgenommen werden kann.

Zudem kann das "Tauschen" der Bestückung des Werkstück-Magazins 300 und des Werkzeug-Magazins 500 auch dazu genutzt werden, zwischen dem Maschinentisch 200 und der Arbeitsspindel 100 eine Übergabe des Werkstücks WS erfolgen zu lassen. Hierfür kann das Werkstück WS in einem entsprechenden Spannmittel (beispielsweise einem Backenfutter; hier nicht gezeigt) an dem Maschinentisch eingespannt sein, wobei das von der Arbeitsspindel 100 aufgenommene Werkzeug WZ nun gegen ein weiteres Spannmittel ausgetauscht wird, und das Werkstück WS von dem Maschinentisch 200 an die Arbeitsspindel 100 durch entsprechende Positionierungen der Arbeitsspindel 100 und des Maschinentisches 200 übergeben wird.

Nachfolgend könnte nun das von dem Maschinentisch 200 aufgenommene Spannmittel gegen ein Werkzeug WZ getauscht werden, und so die bis dato noch nicht bearbeitete Seite des Werkstücks WS bearbeitet werden. Dadurch wäre eine 6-Seiten-Bearbeitung des Werkstücks WS möglich, die völlig automatisch (ohne direktes Eingreifen eines Benutzers z.B. durch ein Umspannen des Werkstücks WS) an der Werkzeugmaschine 1000 erfolgen könnte

Ferner ist in Fig. 2 dargestellt, wie der Greifabschnitt 450 der Werkstück-Wechseleinrichtung 400 sich zwischen die beiden Schenkel des im Wesentlichen U-förmigen Trägers 210 eindreht, was insbesondere bereits während (gleichzeitig mit) der Verfahrbewegung des Greiferabschnitts 450 mittels der Linearachse 420 beginnt bzw. vollzogen wird, damit der Greiferabschnitt 450 das von der Einspannvorrichtung 220 eingespannte Werkstück WS (oder die entsprechende Schnittstelle 12a, 12b, 12c) greifen kann. In diesem Zusammenhang sei wieder auf die Fig. 7 verwiesen, die mehrere mögliche Verfahr- bzw. Positionierbewegungen beschreibt.

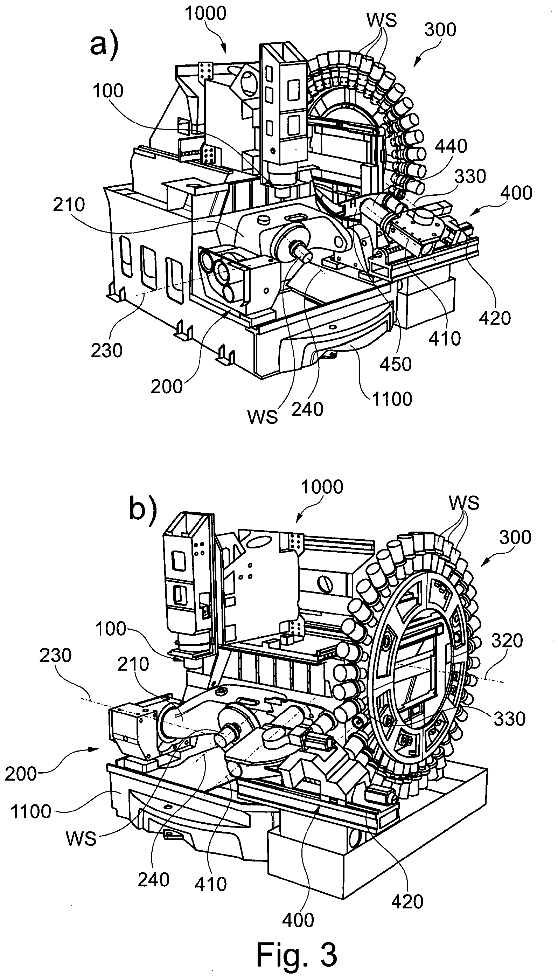

Fig. 3 zeigt schematisch eine Ausführungsform der erfindungsgemäßer Werkzeugmaschine 1000 in Fahrständerbauweise mit vertikal angeordneter Arbeitsspindel 100, schwenkbarem Maschinentisch 200 und schräg angeordneter Werkstück-Wechseleinrichtung 400, wobei hier wieder für die Beschreibung der Arbeitsspindel 100, des Maschinentisches 200 auf dem Maschinenbett 1100, des Werkstück-Magazins 300 und der Werkstück-Wechseleinrichtung 400 mit Hubeinheit 440 auf die Ausführungen zu Fig. 1 verwiesen wird.

Dabei ist zu sehen, dass die Werkstück-Wechseleinrichtung 400 im Vergleich zu der Werkstück-Wechseleinrichtung 400 wie in Fig. 1 gezeigt tiefer liegend in der Werkzeugmaschine 1000 vorgesehen ist und/oder das Werkstück-Magazin 300 in der Werkzeugmaschine 1000 in Relation zur Werkstück-Wechseleinrichtung 400 höher gesetzt wurde. Dies kann beispielsweise nötig werden, wenn besonders lange Werkstücke WS von dem Werkstück-Magazin 300 aufzunehmen sind, um beispielsweise genügend Platz zum Hallenboden bzw. zum Boden der Werkzeugmaschine 1000 vorzuhalten.

Dies kann nun dazu führen, dass die Werkstück-Wechseleinrichtung 400 das Werkstück WS nicht mehr aus einer horizontalen Lage im Werkstück-Magazin 300 entnehmen (oder zurücklegen) kann, sondern hierfür beispielsweise nur noch Magazinplätze 310 nutzen kann, die unterhalb der horizontalen Lage bzw. unterhalb einer durch die Rotationsachse 320 des Werkstück-Magazins 300 verlaufenden, horizontalen Ebene angeordnet sind. Daher muss die Werkstück-Wechseleinrichtung 400 um einen bestimmten Winkel gegenüber dem Maschinenbett 1100 angestellt/angewinkelt werden, so dass der Greiferabschnitt 450 das Werkstück WS (bzw. die Schnittstelle 12a, 12b, 12c) wie gewohnt greifen kann (im Wesentlichen parallele Anordnung der Ausrichtung 330 des entsprechenden Magazinplatzes 310 und der Rotationsachse 410 der Werkstück-Wechseleinrichtung 400.

Soll nun das von der Werkstück-Wechseleinrichtung 400 getragene Werkstück WS in die Einspannvorrichtung 220 des schwenkbaren Maschinentisches 200 eingesetzt/eingespannt werden, so muss entsprechend die Wechselposition des Maschinentisches 200 (eine entsprechende Schwenkbewegung des Trägers 210 um die Schwenkachse 230 herum) dem Winkel der Anstellung der Werkstück-Wechseleinrichtung 400 angepasst werden, so dass wieder die Drehachse 240 der Einspannvorrichtung 220 des Maschinentisches 200 im Wesentlichen parallel zur Rotationsachse 410 der Werkstück-Wechseleinrichtung 400 angeordnet ist. Hierdurch ist nun wieder eine Interaktion zwischen Maschinentisch 200 und Werkstück-Wechseleinrichtung 400 zum Ein- bzw. Auswechseln des Werkstücks WS möglich.

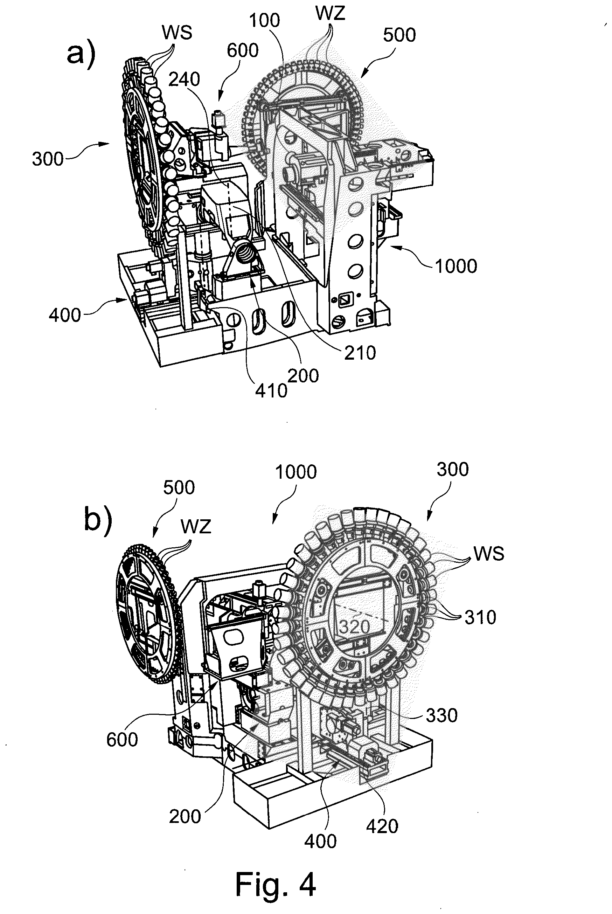

Fig. 4 zeigt schematisch eine weitere Ausführungsform einer Werkzeugmaschine 1000 als Horizontalbearbeitungsmaschine mit horizontal angeordneter Arbeitsspindel 100, schwenkbarem Maschinentisch 200 und unterhalb eines Werkstück-Magazins 300 angeordneter Werkstück-Wechseleinrichtung 400.

Dabei weist die Werkzeugmaschine in Fig. 4 wieder die bekannten Elemente der Arbeitsspindel 100 (hier in horizontaler Anordnung), einen schwenkbaren Maschinentisch 200, ein Werkstück-Magazin 300, eine Werkstück-Wechseleinrichtung400, ein Werkzeug-Magazin 500 und eine Werkzeug-Wechseleinrichtung 600 auf.

Eine Besonderheit dieser Werkzeugmaschine 1000 im Vergleich zu den vorher beschriebenen Werkzeugmaschinen ist dabei die relative Lage der Werkstück-Wechseleinrichtung 400 zu dem Werkstück-Magazin 300 und entsprechend zu dem schwenkbaren Maschinentisch 200. Die Werkstück-Wechseleinrichtung 400 ist in der vorliegenden Ausführungsform unterhalb des Werkstück-Magazins 300 angeordnet. Dies kann beispielsweise bei ungewöhnlich langen Werkstücken WS sinnvoll sein, um dabei trotzdem einen möglichst kompakten Aufbau der restlichen Werkzeugmaschine 1000 (Arbeitsspindel 100, Maschinentisch 200 und gegebenenfalls Werkzeug-Magazin 500 und Werkzeug-Wechseleinrichtung 600) zu realisieren.

Im Ergebnis kann es also sinnvoll sein, dass der Greiferabschnitt 450 das Werkstück WS am untersten/tiefsten Punkt des Werkstück-Magazins 300 abholt bzw. wieder ablegt. Der entsprechende Magazinplatz 310 ist dabei im Wesentlichen vertikal angeordnet (siehe Ausrichtung 330 des entsprechenden Magazinplatzes 310).

Soll nun das von der Werkstück-Wechseleinrichtung 400 getragene Werkstück WS in die Einspannvorrichtung 220 des schwenkbaren Maschinentisches 200 eingesetzt/eingespannt werden, so muss entsprechend die Wechselposition des Maschinentisches 200 angepasst werden, so dass die Drehachse 240 der Einspannvorrichtung 220 des Maschinentisches 200 nicht nur im Wesentlichen parallel zur Ausrichtung 330 des entsprechenden Magazinplatzes 310 (und ferner auch im Wesentlichen parallel zur Rotationsachse 410 der Werkstück-Wechseleinrichtung 400) angeordnet ist, sondern, wie im vorliegenden Fall, die Einspannvorrichtung 220 auch die gleiche Orientierung mit dem entsprechenden Magazinplatz 310 aufweist. Hierfür kann beispielsweise der Träger 210 des Maschinentisches 200 "auf den Kopf" gedreht/geschwenkt werden, wie dies in Fig. 4 gezeigt ist. So kann das Werkstück WS ohne Probleme von dem Greiferabschnitt 450 an die Einspannvorrichtung 220 des Maschinentisches 200 übergeben werden.

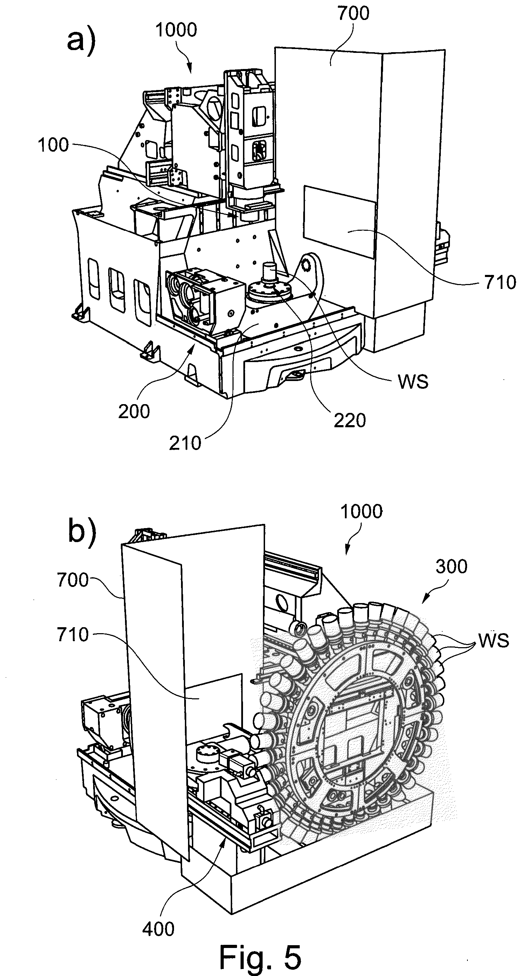

Fig. 5 zeigt schematisch eine weitere Ausführungsform einer Werkzeugmaschine 1000 in Fahrständerbauweise mit einer Abtrennung 700 des Arbeitsraums der Werkzeugmaschine 1000 von dem Werkstück-Magazin 300 und der Werkstück-Wechseleinrichtung 400.

Dabei weist die Abtrennung 700 ferner eine verschließbare Öffnung 710 auf, durch die die Werkstück-Wechseleinrichtung 400 in den Arbeitsraum der Werkzeugmaschine 1000 hinein verfahren werden kann, um dann den Werkstückwechsel in dem Arbeitsraum der Werkzeugmaschine 1000 durchzuführen.

Die Abtrennung 700 von Arbeitsraum und den Bereich der Werkstück-Aufbewahrung und Werkstück-Wechseleinrichtung 400 hat den großen Vorteil, dass diverse Verunreinigungen, die nun einmal bei der (spanenden) Bearbeitung des Werkstücks WS im Arbeitsraum der Werkzeugmaschine 1000 anfallen, sich auch nur im Arbeitsraum verteilen können und eine Verschmutzung des abgetrennten Bereiches daher so gut wie nicht stattfindet.

Weiterhin bietet die Abtrennung 700 den großen Vorteil, dass das Werkstück-Magazin 300 beispielsweise durch einen Bediener weiter bestückt werden kann, auch bei laufender Bearbeitung eines Werkstücks WS durch die Arbeitsspindel 100, ohne dass der Bediener in Gefahr durch umherfliegende Materialspäne oder zu nah an sich bewegende Maschinenteile (wie der Arbeitsspindel 100 oder dem Maschinentisch 200/Träger 210) gerät.

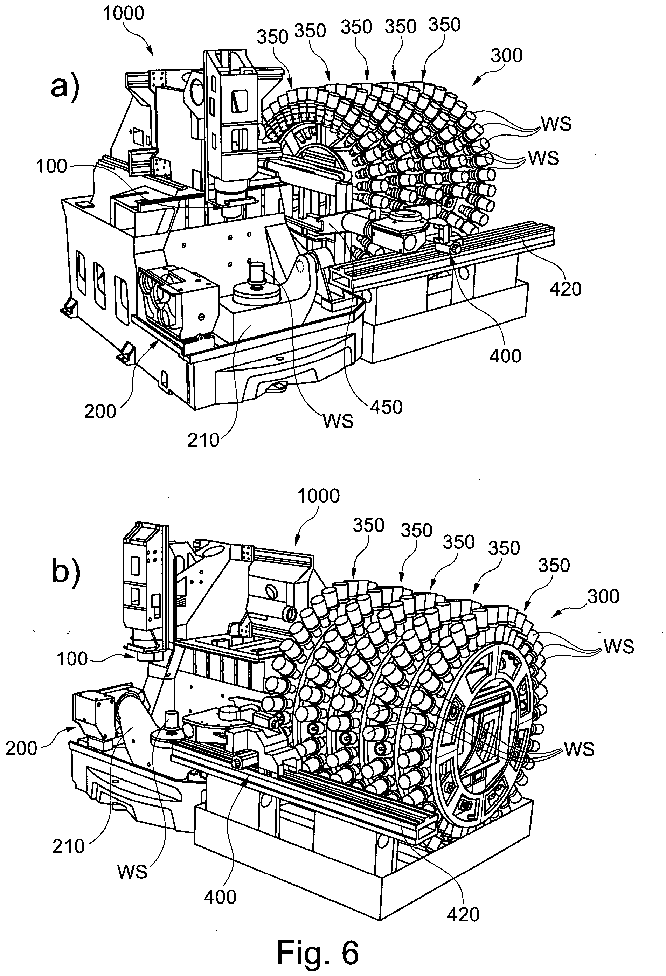

Fig. 6 zeigt schematisch eine weitere Ausführungsform einer Werkzeugmaschine 1000 in Fahrständerbauweise und einem Werkstück-Magazin 300 mit mehreren Werkstück-Magazinabschnitten 350.

Hierbei kann das für die Werkzeugmaschine 1000 verwendete Werkstück-Magazin 300 theoretisch um eine beliebige Anzahl an Werkstück-Magazinabschnitten 350 erweitert werden, je nach Anforderung an die Menge der vorgehaltenen Werkstücke WS.

Teilweise kann hierbei auch eine Art Unterteilung der Werkstück-Magazinabschnitte 350 stattfinden, beispielsweise in der Art, dass eine bestimmte Anzahl an Werkstück-Magazinabschnitte 350 die Rohlinge speichert, und die restlichen Werkstück-Magazinabschnitte 350 die Werkstücke WS aufnehmen, die von der Bearbeitung auf der Werkzeugmaschine 1000 kommen.

Fig. 7 zeigt schematisch verschiedene Kombinationen von Bewegungen einer Werkstück-Wechseleinrichtung 400 und eines Maschinentisches 200 zum Greifen des an dem Maschinentisch 200 eingespannten Werkstücks WS durch den Greiferabschnitt 450 der Werkstück-Wechseleinrichtung 400.

Dabei zeigt die Darstellung a) die einfachste Form der Positionierbewegung der Werkstück-Wechseleinrichtung 400 zu dem Maschinentisch 200, um das eingespannte Werkstück WS zu wechseln.

Hierfür wird eine Kombination aus einer Linearbewegung LB_{WWE} der Werkstück-Wechseleinrichung 400 entlang der Linearachse 420 und eine Rotationsbewegung RB_{WWE} des Greiferabschnitts 450 der Werkstück-Wechseleinrichtung 400 vollzogen.

Insbesondere wird zunächst ein Werkstück WS aus dem entsprechenden Magazinplatz 310 des Werkstück-Magazins 300 abgeholt und von dem Greiferabschnitt 450, der sich hier in einer horizontalen Ausrichtung befindet, aufgenommen. Dann wird die Werkstück-Wechseleinrichtung 400 über die Linearachse 420 in Richtung Maschinentisch 200 verfahren, wobei der Maschinentisch 200 (bzw. der Träger 210) in die Wechselposition um die Schwenkachse 230 geschwenkt wird oder in dieser bereits ist.

Sobald das freie Ende des Greiferabschnitts 450 über dem Werkstück-Magazinseitigen Schenkel des im Wesentlichen U-förmigen Trägers 210 hinweg verfahren wurde, beginnt noch während dieser Verfahrbewegung (Linearbewegung LB_{WWE}) der Greiferabschnitt 450 der Werkstück-Wechseleinrichtung 400 eine Rotationsbewegung RB_{WWE} um die Rotationsachse 410, so dass sich das freie Ende des Greiferabschnitts 450 der Einspannvorrichtung 220 zwischen den beiden Schenkeln des im Wesentlichen U-förmigen Trägers 210 des Maschinentisches 200 nähert.

Diese Kombination der Linearbewegung LB_{WWE} und der Rotationsbewegung RB_{WWE} wird solange fortgeführt, bis das freie Ende des Greiferabschnitts 450 das in der Einspannvorrichtung 220 eingespannte Werkstück WS greifen kann. Nun kann die Einspannvorrichtung 220 die Einspannung des Werkstücks WS lösen und der Greiferabschnitt 450 kann mit einer Hubbewegung entlang der Rotationsachse 410 das Werkstück WS aus der Einspannvorrichtung 220 herausziehen.

Die Kombination aus der Linearbewegung LB_{WWE} und der Rotationsbewegung RB_{WWE} kann auch daher gemacht werden, um den bei einem derartigen Aufbau der Werkzeugmaschine 1000 bzw. bei einem derartigen Maschinentisch 200 auftretenden Höhenversatz h (siehe Darstellung a)) zwischen dem entsprechenden Magazinplatz 310 (bzw. der Werkstück-Wechseleinrichtung 400) und dem in der Einspannvorrichtung 220 eingespannten Werkstück WS auszugleichen/zu überwinden.

Der Vorteil dieser Lösung liegt darin, dass man auf eine vertikale Achse an der Werkstück-Wechseleinrichtung 400 zum Ausgleich des Höhenversatzes h (siehe hierfür auch Darstellung c)) verzichten kann, wobei hierdurch der Bewegungsablauf für das Greifen des an der Einspannvorrichtung 220 eingespannten Werkstücks WS komplexer wird (Überlagerung von zwei Bewegungen LB_{WWE} und RB_{WWE}).

Ist dieses erfolgt, vollzieht der Greiferabschnitt im Wesentlichen eine 180°-Drehung um die Rotationsachse 410, und bringt dadurch das aus dem Werkstück-Magazin 300 entnommene Werkstück WS in eine Position gegenüber der Einspannvorrichtung 220, so dass der Greiferabschnitt 450 durch eine Hubbewegung entlang der Rotationsachse 410 hin zu der Einspannvorrichtung 220 das zu bearbeitende Werkstück WS in die Einspannvorrichtung 220 einsetzen kann.

Nach erfolgter Einspannung fährt der Greiferabschnitt 450 durch eine Kombination der Linearbewegung LB_{WWE} und der Rotationsbewegung RB_{WWE}, nur in umgekehrter Richtung, wieder raus aus der Eingriffsposition und kann dann bis zu seiner horizontalen Ausrichtung um die Rotationsachse 410 zurückgedreht werden und dann wieder das aus der Einspannvorrichtung 220 entnommene Werkstück WS in das Werkstück-Magazin 300 auf einen der Magazinplätze 310 zurücklegen.

Darstellung b) zeigt nun einen weiteren Bewegungsablauf, der im Wesentlichen dem unter Darstellung a) entspricht, nur mit einer zusätzlichen Rotationsbewegung RB_{MT} der Einspannvorrichtung 220 und somit eine Rotationsbewegung des Werkstücks WS.

Eine derartige, wie in der Darstellung b) gezeigte zusätzliche Rotationsbewegung RB_{MT} der Einspannvorrichtung 220 kann beispielsweise dann erforderlich sein, wenn ein Werkstück WS oder eine Schnittstelle (beispielsweise wie 12b in Fig. 9) nur an bestimmten Stellen am Umfang entlang Einkerbungen für das Greifen des Greiferabschnitts 450 aufweist. Würde diese zusätzliche Rotationsbewegung RB_{MT} nicht stattfinden, so könnte zwar der Greiferabschnitt 450 ein Stück weit das Werkstück WS bzw. die Schnittstelle 12b greifen, doch würde bei einem Fortführen der Kombination von LB_{WWE} und RB_{WWE} ein Verkanten des Greiferabschnitts 450 an dem Werkstück WS bzw. an der Schnittstelle 12b stattfinden, wobei dies teilweise bis hin zu einer Beschädigung von Maschinenteilen, insbesondere des Greiferabschnitts 450 führen kann.

Dabei ist zu bemerken, dass die Rotationsbewegung RB_{WWE} und die Rotationsbewegung RB_{MT} stets gleichsinnig sein müssen, um ein Verkanten des Greiferabschnitts 450 mit dem Werkstück WS bzw. mit der Schnittstelle 12b zu verhindern.

Weiterhin kann es bei derartigen Schnittstellen, wie sie beispielsweise in Darstellung b) der Fig. 9 gezeigt sind, erforderlich sein, dass die Maschinensteuerung der Werkzeugmaschine 1000 abgespeichert hat, auf welchen der Magazinplätze 310 des Werkstück-Magazins 300 derartige Schnittstellen an den Werkstücken WS verwendet werden/in Benutzung sind, damit beim Einwechseln dieser Werkstücke WS/dieser Schnittstellen die Maschinensteuerung entsprechend die zusätzliche Rotationsbewegung RB_{MT} steuern kann.

Darstellung c) zeigt nun, wie bereits oben angedeutet, die Linearbewegung LB_{WWE} der Werkstück-Wechseleinrichtung 400 und die Rotationsbewegung RB_{WWE} des Greiferabschnitts 450 sowie eine Vertikalbewegung VB_{WWE} der Werkstück-Wechseleinrichtung 400 (im Wesentlichen auch eine Linearbewegung, nur in vertikaler Richtung) über eine hier nicht weiter dargestellte Linearachse, um den Höhenversatz h zwischen dem entsprechenden Magazinplatz 310 (bzw. der Werkstück-Wechseleinrichtung 400) und dem in der Einspannvorrichtung 220 eingespannten Werkstück WS auszugleichen/zu überwinden.

Vorteil dieser Variante ist, dass die genannten Bewegungen nun nicht mehr zwingend miteinander kombiniert werden müssen im Sinne einer kombinierten, gleichzeitigen Bewegung aus allen drei oder zumindest zwei Bewegungen. Im einfachsten Fall fährt die Linearbewegung LB_{WWE} die Werkstück-Wechseleinrichtung 400 soweit wie erforderlich in Richtung Maschinentisch 200, danach erfolgt die Drehung des Greiferabschnitts 450 um im Wesentlichen 90° durch die Rotationsbewegung RB_{WWE}, so dass das freie Ende des Greiferabschnitts 450 über dem am Maschinentisch 200 eingespannten Werkstück WS positioniert ist. Im Anschluss wird nun die Werkstück-Wechseleinrichtung 400 in vertikaler Richtung durch die Vertikalbewegung VB_{WWE} abgesenkt, so dass das freie Ende des Greiferabschnitts 450 in den Eingriff mit dem am Maschinentisch 200 eingespannten Werkstück WS kommt.

Die weiteren Abläufe und Schritte für den Wechsel des an dem Maschinentisch 200 eingespannten Werkstücks WS wurden zuvor in genügendem Maße beschrieben und sollen daher an dieser Stelle nicht wiederholt werden.

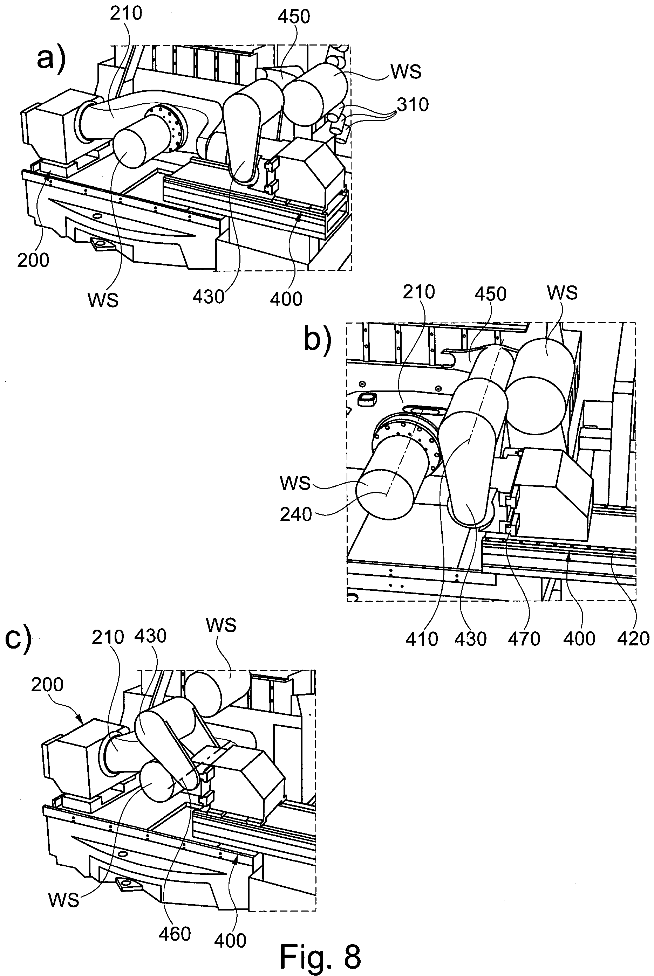

Fig. 8 zeigt schematisch eine weitere Ausführungsform einer Werkstück-Wechseleinrichtung 400 mit weiterer Bewegung zum Ein- bzw. Auswechseln des an dem Maschinentisch 200 eingespannten Werkstücks WS (in den Darstellungen a) bis c)).

Dabei weist die Werkstück-Wechseleinrichtung 400 neben der Linearachse 420 eine zweite, in horizontaler Richtung verfahrende Linearachse 470 auf (siehe hierfür insbesondere Darstellung b)), die den Greiferabschnitt 450 bei einem Werkstückwechsel in Richtung bzw. in entgegengesetzter Richtung der Einspannvorrichtung 220 des Maschinentisches 200 verfährt.

Überdies kann die Werkstück-Wechseleinrichtung 400 zusätzlich über eine eigene Schwenkachse 460 verfügen, um ein Schwenkabschnitt 430, der die Rotationsachse 410 und den Greiferabschnitt 450 aufweist, um die Schwenkachse 460 zu schwenken (siehe hierfür insbesondere Darstellung c)) und so den Höhenversatz h (wie weiter oben bereits beschrieben) zwischen dem entsprechenden Magazinplatz 310 (bzw. der Werkstück-Wechseleinrichtung 400) und dem in der Einspannvorrichtung 220 eingespannten Werkstück WS auszugleichen/zu überwinden.

Dabei kann die Schwenkbewegung um die Schwenkachse 460 in Kombination mit den bereits genannten Bewegungen LB_{WWE}, RB_{WWE}, RB_{MT} oder VB_{WWE} erfolgen oder aber separat voneinander.

Fig. 9 zeigt schematisch verschiedene Varianten von Werkstückträgern 10 (Paletten), auf denen jeweils zumindest ein Werkstück WS aufgespannt werden kann, mit verschiedenen Schnittstellen 12a, 12b, 12c.

Die Verwendung von Werkstückträgern 10 bietet den Vorteil, dass verschiedenste Werkstücke WS von einer (am Maschinentisch 200 vorgesehenen) Einspannvorrichtung 220 aufgenommen werden können, ohne für jedes unterschiedliche Werkstück WS eine separate Einspannung vornehmen zu müssen.

Daher soll an dieser Stelle darauf hingewiesen sein, dass der bereits beschriebene Wechsel des Werkstücks WS nicht zwingend nur mit dem eigentlichen Werkstück WS erfolgt, sondern vielmehr auch das Wechseln eines Werkstücks WS auf einem solchen Werkstückträger 10 (Palette) umfasst. Daher können teilweise oder alle Magazinplätze 310 des Werkstück-Magazins 300 auch dazu eingerichtet sein, die Werkstückträger 10 über die entsprechenden Schnittstellen 12a, 12b, 12c aufzunehmen.

Dabei zeigt Darstellung a) eine benutzerspezifische Ausführungsform eines Werkstückträgers 10 mit einer am Außenumfang des Werkstückträgers 10 vorgesehenen, umlaufenden Nut, die von einer Werkstück-Wechseleinrichtung 400 genutzt werden kann, um den Werkstückträger 10 zu greifen. Zur Einspannung des Werkstückträgers 10 in die Einspannvorrichtung 220 weist diese Ausführungsform weiterhin eine benutzerspezifische Schnittstelle 12a auf.

Darstellung b) zeigt eine benutzerspezifische Ausführungsform eines Werkstückträgers 10, wobei abschnittsweise Nuten am Außenumfang der Schnittstelle 12b vorgesehen sind, die von einer Werkstück-Wechseleinrichtung 400 genutzt werden können, um den Werkstückträger 10 zu greifen. Hierfür müssen aber die Nuten und der Greiferabschnitt 450 der Werkstück-Wechseleinrichtung 400 so zueinander ausgerichtet sein, dass ein Greifen des Greiferabschnitts 450 in die Nuten der Schnittstelle 12b möglich wird. Eine entsprechende Drehung der Schnittstelle 12b (beispielsweise durch eine drehend positionierbare Einspannvorrichtung 220 am Maschinentisch 200) könnte dafür nötig sein. Auch hier ist die Schnittstelle 12b eine benutzerspezifische.

Darstellung c) zeigt eine benutzerspezifische Ausführungsform eines Werkstückträgers 10 mit einer am Außenumfang der Schnittstelle 12c vorgesehenen, umlaufenden Nut, die von einer Werkstück-Wechseleinrichtung 400 genutzt werden kann, um den Werkstückträger 10 zu greifen. Zur Einspannung des Werkstückträgers 10 in die Einspannvorrichtung 220 weist diese Ausführungsform weiterhin eine standardisierte Schnittstelle 12a in Form eines Hohlschaftkegels (HSK) auf, wobei die Schnittstelle auch als Steilkegel ausgeführt sein kann. Dabei sind die beiden genannten Varianten nicht als Einschränkung aufzufassen und können durch jegliche andere standardisierte Schnittstelle ersetzt werden.

Vorstehend wurde ein Ausführungsbeispiel der vorliegenden Erfindung sowie deren Vorteile detailliert unter Bezugnahme auf die beigefügten Figuren beschrieben.

### LISTE DER BEZUGSZEICHEN

- **10**: Werkstückträger
- **12a-c**: Schnittstelle
- **100**: Arbeitsspindel
- **200**: (schwenkbarer) Maschinentisch
- **210**: U-förmiger Träger
- **220**: Einspannvorrichtung des Maschinentisches
- **230**: Schwenkachse des Maschinentisches
- **240**: Drehachse der Einspannvorrichtung
- **300**: Werkstück-Magazin
- **310**: Magazinplatz
- **320**: Rotationsachse des Werkstück-Magazins
- **330**: Ausrichtung des Magazinplatzes
- **350**: Werkstück-Magazinabschnitt
- **400**: Werkstück-Wechseleinrichtung
- **410**: Rotationsachse des Greiferabschnitts
- **420**: Linearachse der Werkstück-Wechseleinrichtung
- **430**: Schwenkabschnitt der Werkstück-Wechseleinrichtung
- **440**: Hubeinheit des Greiferabschnitts
- **450**: Greiferabschnitt
- **460**: Schwenkachse
- **470**: Linearachse der Werkstück-Wechseleinrichtung
- **500**: Werkzeug-Magazin
- **600**: Werkzeug-Wechseleinrichtung
- **700**: Abtrennung
- **710**: Öffnung (verschließbar) in der Abtrennung
- **1000**: Werkzeugmaschine
- **1100**: Maschinenbett
- **LB_{WWE}**: Linearbewegung der Werkstück-Wechseleinrichtung
- **RB_{MT}**: Rotationsbewegung der Einspannvorrichtung
- **RB_{WWE}**: Rotationsbewegung der Werkstück-Wechseleinrichtung
- **VB_{WWE}**: Vertikalbewegung der Werkstück-Wechseleinrichtung
- **WS**: Werkstück
- **WZ**: Werkzeug

## Patentansprüche

1. Werkzeugmaschine (1000) mit:
- einem um eine Schwenkachse (230) schwenkbaren Maschinentisch (200) zum Einspannen eines Werkstücks (WS),
- einem Werkstück-Magazin (300) mit einer Vielzahl von Magazinplätzen zur Aufnahme jeweiliger Werkstücke (WS), und
- einer Werkstück-Wechseleinrichtung (400) zum Ein- bzw. Auswechseln eines Werkstücks (WS) an dem Maschinentisch (200);
wobei der schwenkbare Maschinentisch (200) dazu eingerichtet ist, zum Ein- bzw. Auswechseln des Werkstücks (WS) an dem Maschinentisch (200) durch die Werkstück-Wechseleinrichtung (400) in eine Wechselposition zu schwenken, und
die Werkstück-Wechseleinrichtung (400) dazu eingerichtet ist, das Werkstück (WS) an dem in die Wechselposition geschwenkten Maschinentisch (200) ein- bzw. auszuwechseln,
wobei die Werkstück-Wechseleinrichtung (400) einen Greiferabschnitt (450) aufweist, der zum Greifen des Werkstücks (WS) oder eines Werkstückträgers (10) mit aufgespanntem Werkstück (WS) an einer Einspannvorrichtung (220) des Maschinentisches (200) und/oder an einem Magazinplatz (310) der Vielzahl von Magazinplätzen des Werkstück-Magazins (300) eingerichtet ist,
wobei die Werkstück-Wechseleinrichtung (400) eine schräg zwischen einer horizontalen und einer vertikalen Anordnung angeordnete Rotationsachse (410) aufweist, um die der Greiferabschnitt (450) rotierbar ist, und die beim Greifen des Werkstücks (WS) oder des Werkstückträgers (10) durch den Greiferabschnitt (450) im Wesentlichen parallel zur Ausrichtung der Einspannvorrichtung (220) in der Wechselposition des Maschinentisches (200) und/oder des entsprechenden Magazinplatzes (310) der Vielzahl von Magazinplätzen des Werkstück-Magazins (300) angeordnet ist.

2. Werkzeugmaschine (1000) nach Anspruch 1, **dadurch gekennzeichnet, dass**
das Werkstück-Magazin (300) zumindest eine Rotationsachse (320) aufweist, um die herum angeordnet das Werkstück-Magazin (300) eine Vielzahl radial ausgerichteter Magazinplätze zur Aufnahme jeweiliger Werkstücke (WS) aufweist.

3. Werkzeugmaschine (1000) nach Anspruch 2, **dadurch gekennzeichnet, dass** das Werkstück-Magazin (300) mindestens einen Werkstück-Magazinabschnitt (350), bevorzugt mehrere Werkstück-Magazinabschnitte aufweist, die im Wesentlichen um die Rotationsachse (320) des Werkstück-Magazins (300) drehbar sind und die jeweils eine Vielzahl radial ausgerichteter Magazinplätze zur Aufnahme jeweiliger Werkstücke (WS) aufweisen.

4. Werkzeugmaschine (1000) nach Anspruch 2 oder 3, **dadurch gekennzeichnet, dass**
die Werkstück-Wechseleinrichtung (400) das Werkstück (WS) einem Magazinplatz (310) der Vielzahl von Magazinplätzen des Werkstück-Magazins (300) entnimmt oder das Werkstück (WS) in einem Magazinplatz (310) der Vielzahl von Magazinplätzen des Werkstück-Magazins (300) ablegt, der unterhalb der durch die Rotationsachse (320) des Werkstück-Magazins (300) verlaufenden horizontalen Ebene angeordnet ist.

5. Werkzeugmaschine (1000) nach einem der vorstehenden Ansprüche, **dadurch gekennzeichnet, dass**
die Einspannvorrichtung (220) des Maschinentisches (200) senkrecht zur Schwenkachse (230) des Maschinentischs (200) ausgerichtet ist,
wobei in der Wechselposition des Maschinentisches (200) die Einspannvorrichtung (220) des Maschinentisches (200) im Wesentlichen parallel und/oder im Wesentlichen gleich orientiert zu einem Magazinplatz (310) des Werkstück-Magazins (300) ausgerichtet ist, aus dem das Werkstück (WS) durch die Werkstück-Wechseleinrichtung (400) entnommen und in die Einspannvorrichtung (220) des Maschinentisches (200) eingesetzt wird oder in den das Werkstück (WS) aus der Einspannvorrichtung (220) des Maschinentisches (200) durch die Werkstück-Wechseleinrichtung (400) eingesetzt wird.

6. Werkzeugmaschine (1000) nach einem der vorstehenden Ansprüche, **dadurch gekennzeichnet, dass**
das Werkstück (WS) über eine standardisierte Schnittstelle (12a; 12b; 12c), insbesondere eine HSK-Schnittstelle (12c) oder eine Steilkegelschnittstelle, oder eine Benutzer-spezifische Schnittstelle (12a) von der Einspannvorrichtung (220) des Maschinentisches (200) und/oder von einem Magazinplatz (310) der Vielzahl von Magazinplätzen des Werkstück-Magazins (300) aufnehmbar ist.

7. Werkzeugmaschine (1000) nach einem der vorstehenden Ansprüche, **dadurch gekennzeichnet, dass**
die Werkstück-Wechseleinrichtung (400) über eine Linearachse (420) zwischen dem Werkstück-Magazin (300) und dem schwenkbaren Maschinentisch (200) verfahrbar ist.

8. Werkzeugmaschine (1000) nach Anspruch 7, **dadurch gekennzeichnet, dass**
die Werkstück-Wechseleinrichtung (400) dazu eingerichtet ist, beim Ein- bzw. Auswechseln des vom Maschinentisch (200) eingespannten Werkstücks (WS) den Greiferabschnitt (450) der Werkstück-Wechseleinrichtung (400) für das Greifen des Werkstücks (WS) an der Einspannvorrichtung (220) des Maschinentisches (200) zu positionieren, indem die Werkstück-Wechseleinrichtung (400) entlang der Linearachse (420) verfahren wird und gleichzeitig damit begonnen wird, den Greiferabschnitt (450) um die Rotationsachse (410) der Werkstück-Wechseleinrichtung (400) drehend zu positionieren.

9. Werkzeugmaschine (1000) nach einem der vorstehenden Ansprüche, **dadurch gekennzeichnet, dass**
der schwenkbare Maschinentisch (200) als Schwenkrundtisch ausgebildet ist.

10. Werkzeugmaschine (1000) nach Anspruch 9, **dadurch gekennzeichnet, dass**
der schwenkbare Maschinentisch (200) eine senkrecht zur Schwenkachse (230) ausgerichtete Drehachse (240) aufweist, um die herum die Einspannvorrichtung (220) des Maschinentisches (200) zum Einspannen des Werkstücks (WS) drehbar ist, und
der Maschinentisch (200) dazu eingerichtet ist, die Einspannvorrichtung (220) des Maschinentisches (200) drehend zu positionieren, um ein Greifen des von der Einspannvorrichtung (220) des Maschinentisches (200) eingespannten Werkstücks (WS) durch den Greiferabschnitt (450) der Werkstück-Wechseleinrichtung (400) zu ermöglichen.

11. Werkzeugmaschine (1000) nach Anspruch 6 und 10, **dadurch gekennzeichnet, dass**
der Maschinentisch (200) dazu eingerichtet ist, die Einspannvorrichtung (220) des Maschinentisches (200) in Abhängigkeit der Schnittstelle (12a; 12b; 12c) des Werkstücks (WS), über die das Werkstück (WS) von der Einspannvorrichtung (220) des Maschinentisches (200) und/oder von einem Magazinplatz (310) der Vielzahl von Magazinplätzen des Werkstück-Magazins (300) aufnehmbar ist, drehend zu positionieren, um ein Greifen des von der Einspannvorrichtung (220) des Maschinentisches (200) eingespannten Werkstücks (WS) durch den Greiferabschnitt (450) der Werkstück-Wechseleinrichtung (400) zu ermöglichen, oder
der Maschinentisch (200) dazu eingerichtet ist, die Einspannvorrichtung (220) des Maschinentisches (200) in Abhängigkeit der Schnittstelle (12a; 12b; 12c) des Werkstücks (WS), über die das Werkstück (WS) von der Einspannvorrichtung (220) des Maschinentisches (200) und/oder von einem Magazinplatz (310) der Vielzahl von Magazinplätzen des Werkstück-Magazins (300) aufnehmbar ist, und in Abhängigkeit zu der relativen Lage der Schnittstelle (12a; 12b; 12c) zu dem Greiferabschnitt (450) der Werkstück-Wechseleinrichtung (400) drehend zu positionieren, um ein Greifen des von der Einspannvorrichtung (220) des Maschinentisches (200) eingespannten Werkstücks (WS) durch den Greiferabschnitt (450) der Werkstück-Wechseleinrichtung (400) zu ermöglichen.

12. Werkzeugmaschine (1000) nach einem der Ansprüche 8, 10 oder 11 **dadurch gekennzeichnet, dass**
die Werkstück-Wechseleinrichtung (400) eine Vertikalachse aufweist, die zum vertikalen Verfahren des Greiferabschnitts (450) und der Rotationsachse (410) der Werkstück-Wechseleinrichtung (400) eingerichtet ist,
wobei beim Wechsel des am Maschinentisch (200) eingespannten Werkstücks (WS) die Werkstück-Wechseleinrichtung (400) dazu eingerichtet ist, für das Greifen des Werkstücks (WS) an der Einspannvorrichtung des Maschinentisches (200) den Greiferabschnitt (450) und die Rotationsachse (410) der Werkstück-Wechseleinrichtung (400) entlang der Vertikalachse zu verfahren, um ein Greifen des von der Einspannvorrichtung (220) des Maschinentisches (200) eingespannten Werkstücks (WS) durch den Greiferabschnitt (450) der Werkstück-Wechseleinrichtung (400) zu ermöglichen.

13. Werkzeugmaschine (1000) nach einem der vorstehenden Ansprüche, **dadurch gekennzeichnet, dass**
der Greiferabschnitt (450) einen ansteuerbaren Hubmechanismus (440) aufweist, durch den der Greiferabschnitt (450) in Richtung der Rotationsachse (410) der Werkstück-Wechseleinrichtung (400) translatorisch bewegbar ist, so dass das Werkstück (WS) aus der Einspannvorrichtung (220) des Maschinentisches (200) und/oder aus dem entsprechenden Magazinplatz (310) der Vielzahl von Magazinplätzen des Werkstück-Magazins (300) entnehmbar ist und/oder das Werkstück (WS) in die Einspannvorrichtung (220) des Maschinentisches (200) und/oder in den entsprechenden Magazinplatz (310) der Vielzahl von Magazinplätzen des Werkstück-Magazins (300) einsetzbar ist.

14. Werkzeugmaschine (1000) nach einem der vorstehenden Ansprüche, **dadurch gekennzeichnet, dass**
das Werkstück-Magazin (300) als Radmagazin ausgebildet ist.

## Claims

1. A machine tool (1000) comprising:
- a machine table (200) pivotable about a pivot axis (230) for clamping a workpiece (WS),
- a workpiece magazine (300) having a plurality of magazine locations for receiving respective workpieces (WS), and
- a workpiece changing device (400) for changing a workpiece (WS) on the machine table (200);
wherein the pivotable machine table (200) is adapted to be pivoted into a changing position by the workpiece changing device (400) for changing the workpiece (WS) on the machine table (200), and
the workpiece changing device (400) is adapted to change the workpiece (WS) on the machine table (200) pivoted into the changing position,
wherein the workpiece changing device (400) has a gripper portion (450) which is adapted to grip the workpiece (WS) or a workpiece carrier (10) with clamped workpiece (WS) on a clamping device (220) of the machine table (200) and/or on a magazine location (310) of the plurality of magazine locations of the workpiece magazine (300),
wherein the workpiece changing device (400) has an axis of rotation (410) which is arranged obliquely between a horizontal and a vertical arrangement and about which the gripper portion (450) is rotatable, and which is arranged substantially parallel to the alignment of the clamping device (220) in the changing position of the machine table (200) and/or of the corresponding magazine location (310) of the plurality of magazine locations of the workpiece magazine (300) when the workpiece (WS) or the workpiece carrier (10) is gripped by the gripper portion (450).

2. The machine tool (1000) according to claim 1, **characterized in that**
the workpiece magazine (300) has at least one axis of rotation (320) about which the workpiece magazine (300) has a plurality of radially aligned magazine locations for receiving respective workpieces (WS).

3. The machine tool (1000) according to claim 2, **characterized in that**
the workpiece magazine (300) has at least one workpiece magazine portion (350), preferably a plurality of workpiece magazine portions, which are substantially rotatable about the axis of rotation (320) of the workpiece magazine (300) and which each have a plurality of radially aligned magazine locations for receiving respective workpieces (WS).

4. The machine tool (1000) according to claim 2 or 3, **characterized in that**
the workpiece changing device (400) removes the workpiece (WS) from a magazine location (310) of the plurality of magazine locations of the workpiece magazine (300) or deposits the workpiece (WS) in a magazine location (310) of the plurality of magazine locations of the workpiece magazine (300) which is arranged below the horizontal plane extending through the axis of rotation (320) of the workpiece magazine (300).

5. The machine tool (1000) according to any one of the preceding claims, **characterized in that**
the clamping device (220) of the machine table (200) is aligned perpendicular to the pivot axis (230) of the machine table (200),
wherein in the changing position of the machine table (200) the clamping device (220) of the machine table (200) is aligned substantially parallel and/or substantially identically oriented to a magazine location (310) of the workpiece magazine (300) from which the workpiece (WS) is removed by the workpiece changing device (400) and inserted into the clamping device (220) of the machine table (200) or into which the workpiece (WS) is inserted from the clamping device (220) of the machine table (200) by the workpiece changing device (400).

6. The machine tool (1000) according to any one of the preceding claims, **characterized in that**
the workpiece (WS) can be received by the clamping device (220) of the machine table (200) and/or by a magazine location (310) of the plurality of magazine locations of the workpiece magazine (300) via a standardized interface (12a; 12b; 12c), in particular an HSK interface (12c) or a steep-taper interface, or a user-specific interface (12a).

7. The machine tool (1000) according to any one of the preceding claims, **characterized in that**
the workpiece changing device (400) is movable between the workpiece magazine (300) and the pivotable machine table (200) via a linear axis (420).

8. The machine tool (1000) according to claim 7, **characterized in that**
the workpiece changing device (400) is adapted, when changing the workpiece (WS) clamped by the machine table (200), to position the gripper portion (450) of the workpiece changing device (400) for gripping the workpiece (WS) on the clamping device (220) of the machine table (200) by moving the workpiece changing device (400) along the linear axis (420) and at the same time starting to position the gripper portion (450) by rotating said gripper portion (450) aroundthe axis of rotation (410) of the workpiece changing device (400).

9. The machine tool (1000) according to any one of the preceding claims, **characterized in that**
the pivotable machine table (200) is configured as a pivoting rotary table.

10. The machine tool (1000) according to claim 9, **characterized in that**
the pivotable machine table (200) has an axis of rotation (240) oriented perpendicularly to the pivot axis (230), about which the clamping device (220) of the machine table (200) is rotatable for clamping the workpiece (WS), and
the machine table (200) is adapted to position the clamping device (220) of the machine table (200) rotatably in order to enable gripping of the workpiece (WS) clamped by the clamping device (220) of the machine table (200) by the gripper portion (450) of the workpiece changing device (400).

11. The machine tool (1000) according to claim 6 and 10, **characterized in that**
the machine table (200) is adapted to position by way of rotation the clamping device (220) of the machine table (200) depending on the interface (12a; 12b; 12c) of the workpiece (WS), via which the workpiece (WS) can be received by the clamping device (220) of the machine table (200) and/or by a magazine location (310) of the plurality of magazine locations of the workpiece magazine (300), in order to enable gripping of the workpiece (WS) clamped by the clamping device (220) of the machine table (200) by the gripper portion (450) of the workpiece changing device (400), or
the machine table (200) is adapted to position by way of rotation the clamping device (220) of the machine table (200) depending on the interface (12a; 12b; 12c) of the workpiece (WS), via which the workpiece (WS) can be received by the clamping device (220) of the machine table (200) and/or by a magazine location (310) of the plurality of magazine locations of the workpiece magazine (300), and depending on the relative position of the interface (12a; 12b; 12c) to the gripper portion (450) of the workpiece changing device (400), in order to enable gripping of the workpiece (WS) clamped by the clamping device (220) of the machine table (200) by the gripper portion (450) of the workpiece changing device (400).

12. The machine tool (1000) according to any one of claims 8, 10 or 11, **characterized in that**
the workpiece changing device (400) has a vertical axis which is adapted to vertically move the gripper portion (450) and the axis of rotation (410) of the workpiece changing device (400),
wherein when changing the workpiece (WS) clamped on the machine table (200), the workpiece changing device (400) is adapted to move the gripper portion (450) and the axis of rotation (410) of the workpiece changing device (400) along the vertical axis for gripping the workpiece (WS) on the clamping device of the machine table (200), in order to enable gripping of the workpiece (WS) clamped by the clamping device (220) of the machine table (200) by the gripper portion (450) of the workpiece changing device (400).

13. The machine tool (1000) according to any one of the preceding claims, **characterized in that**
the gripper portion (450) has a controllable lifting mechanism (440) by which the gripper portion (450) is translationally movable in the direction of the axis of rotation (410) of the workpiece changing device (400), so that the workpiece (WS) can be removed from the clamping device (220) of the machine table (200) and/or from the corresponding magazine location (310) of the plurality of magazine locations of the workpiece magazine (300) and/or the workpiece (WS) can be inserted into the clamping device (220) of the machine table (200) and/or into the corresponding magazine location (310) of the plurality of magazine locations of the workpiece magazine (300).

14. The machine tool (1000) according to any one of the preceding claims, **characterized in that**
the workpiece magazine (300) is configured as a wheel magazine.

## Revendications

1. Machine-outil (1000) comprenant :
- une table de machine (200) pouvant pivoter autour d'un axe de pivotement (230) pour serrer une pièce à usiner (WS),
- un magasin de pièces à usiner (300) comprenant une pluralité d'emplacements de magasin pour recevoir des pièces à usiner (WS) respectives, et
- un dispositif de changement de pièce à usiner (400) pour remplacer une pièce à usiner (WS) sur la table de machine (200) ;
la table de machine (200) pouvant pivoter étant conçue pour pivoter dans une position de changement par le dispositif de changement de pièce à usiner (400) pour remplacer la pièce à usiner (WS) sur la table de machine (200), et
le dispositif de changement de pièce à usiner (400) étant conçu pour remplacer la pièce à usiner (WS) sur la table de machine (200) pivotée dans la position de changement,
le dispositif de changement de pièce à usiner (400) comprenant une section de préhension (450) qui est conçue pour saisir la pièce à usiner (WS) ou un porte-pièce (10) avec la pièce à usiner (WS) serrée sur un dispositif de serrage (220) de la table de machine (200) et/ou sur un emplacement de magasin (310) de la pluralité d'emplacements de magasin du magasin de pièces à usiner (300),
le dispositif de changement de pièce à usiner (400) comprenant un axe de rotation (410) disposé de manière oblique entre un agencement horizontal et un agencement vertical, autour duquel la section de préhension (450) peut tourner, et qui, lors de la préhension de la pièce à usiner (WS) ou du porte-pièce (10) par la section de préhension (450), est disposé sensiblement parallèlement à l'orientation du dispositif de serrage (220) dans la position de changement de la table de machine (200) et/ou de l'emplacement de magasin (310) correspondant de la pluralité d'emplacements de magasin du magasin de pièces à usiner (300).

2. Machine-outil (1000) selon la revendication 1, **caractérisée en ce que**
le magasin de pièces à usiner (300) comprend au moins un axe de rotation (320) autour duquel le magasin de pièces à usiner (300) comprend une pluralité d'emplacements de magasin orientés radialement pour recevoir des pièces à usiner (WS) respectives.

3. Machine-outil (1000) selon la revendication 2, **caractérisée en ce que**
le magasin de pièces à usiner (300) comprend au moins une section de magasin de pièces à usiner (350), de préférence plusieurs sections de magasin de pièces à usiner, qui peuvent tourner sensiblement autour de l'axe de rotation (320) du magasin de pièces à usiner (300) et qui comprennent chacune une pluralité d'emplacements de magasin orientés radialement pour recevoir des pièces à usiner (WS) respectives.

4. Machine-outil (1000) selon la revendication 2 ou 3, **caractérisée en ce que**
le dispositif de changement de pièce à usiner (400) prélève la pièce à usiner (WS) d'un emplacement de magasin (310) de la pluralité d'emplacements de magasin du magasin de pièces à usiner (300) ou dépose la pièce à usiner (WS) dans un emplacement de magasin (310) de la pluralité d'emplacements de magasin du magasin de pièces à usiner (300), qui est disposé au-dessous du plan horizontal s'étendant à travers l'axe de rotation (320) du magasin de pièces à usiner (300).

5. Machine-outil (1000) selon l'une quelconque des revendications précédentes, **caractérisée en ce que**
le dispositif de serrage (220) de la table de machine (200) est orienté perpendiculairement à l'axe de pivotement (230) de la table de machine (200),
dans la position de changement de la table de machine (200), le dispositif de serrage (220) de la table de machine (200) étant orienté sensiblement parallèlement et/ou sensiblement de manière identique à un emplacement de magasin (310) du magasin de pièces à usiner (300), duquel la pièce à usiner (WS) est prélevée par le dispositif de changement de pièce à usiner (400) et insérée dans le dispositif de serrage (220) de la table de machine (200) ou dans lequel la pièce à usiner (WS) est insérée hors du dispositif de serrage (220) de la table de machine (200) par le dispositif de changement de pièce à usiner (400).

6. Machine-outil (1000) selon l'une quelconque des revendications précédentes, **caractérisée en ce que**
la pièce à usiner (WS) peut être reçue par le dispositif de serrage (220) de la table de machine (200) et/ou par un emplacement de magasin (310) de la pluralité d'emplacements de magasin du magasin de pièces à usiner (300) par le biais d'une interface standardisée (12a ; 12b ; 12c), en particulier une interface HSK (12c) ou une interface à cône abrupt, ou une interface spécifique à l'utilisateur (12a).

7. Machine-outil (1000) selon l'une quelconque des revendications précédentes, **caractérisée en ce que**
le dispositif de changement de pièce à usiner (400) peut être déplacé par le biais d'un axe linéaire (420) entre le magasin de pièces à usiner (300) et la table de machine pivotante (200).

8. Machine-outil (1000) selon la revendication 7, **caractérisée en ce que**
le dispositif de changement de pièce à usiner (400) est conçu pour positionner, lors du remplacement de la pièce à usiner (WS) serrée par la table de machine (200), la section de préhension (450) du dispositif de changement de pièce à usiner (400) pour saisir la pièce à usiner (WS) sur le dispositif de serrage (220) de la table de machine (200) en déplaçant le dispositif de changement de pièce à usiner (400) le long de l'axe linéaire (420) et en commençant simultanément à positionner la section de préhension (450) en rotation autour de l'axe de rotation (410) du dispositif de changement de pièce à usiner (400).

9. Machine-outil (1000) selon l'une quelconque des revendications précédentes, **caractérisée en ce que**
la table de machine (200) pivotante est réalisée sous forme de table ronde pivotante.

10. Machine-outil (1000) selon la revendication 9, **caractérisée en ce que**
la table de machine (200) pivotante présente un axe de rotation (240) orienté perpendiculairement à l'axe de pivotement (230), autour duquel le dispositif de serrage (220) de la table de machine (200) peut tourner pour serrer la pièce à usiner (WS), et
la table de machine (200) est conçue pour positionner le dispositif de serrage (220) de la table de machine (200) en rotation afin de permettre une préhension de la pièce à usiner (WS) serrée par le dispositif de serrage (220) de la table de machine (200) par la section de préhension (450) du dispositif de changement de pièce à usiner (400).

11. Machine-outil (1000) selon la revendication 6 et 10, **caractérisée en ce que**
la table de machine (200) est conçue pour positionner le dispositif de serrage (220) de la table de machine (200) par rotation en fonction de l'interface (12a ; 12b ; 12c) de la pièce à usiner (WS), par le biais de laquelle la pièce à usiner (WS) peut être reçue par le dispositif de serrage (220) de la table de machine (200) et/ou par un emplacement de magasin (310) de la pluralité d'emplacements de magasin du magasin de pièces à usiner (300), afin de permettre une préhension de la pièce à usiner (WS) serrée par le dispositif de serrage (220) de la table de machine (200) par la section de préhension (450) du dispositif de changement de pièce à usiner (400), ou
la table de machine (200) est conçue pour positionner le dispositif de serrage (220) de la table de machine (200) par rotation en fonction de l'interface (12a ; 12b ; 12c) de la pièce à usiner (WS), par le biais de laquelle la pièce à usiner (WS) peut être reçue par le dispositif de serrage (220) de la table de machine (200) et/ou par un emplacement de magasin (310) de la pluralité d'emplacements de magasin du magasin de pièces à usiner (300), et en fonction de la position relative de l'interface (12a ; 12b ; 12c) par rapport à la section de préhension (450) du dispositif de changement de pièce à usiner (400), afin de permettre une préhension de la pièce à usiner (WS) serrée par le dispositif de serrage (220) de la table de machine (200) par la section de préhension (450) du dispositif de changement de pièce à usiner (400).

12. Machine-outil (1000) selon l'une quelconque des revendications 8, 10 ou 11, **caractérisée en ce que**
le dispositif de changement de pièce à usiner (400) comprend un axe vertical qui est conçu pour déplacer verticalement la section de préhension (450) et l'axe de rotation (410) du dispositif de changement de pièce à usiner (400),
lors du changement de la pièce à usiner (WS) serrée sur la table de machine (200), le dispositif de changement de pièce à usiner (400) étant conçu pour déplacer la section de préhension (450) et l'axe de rotation (410) du dispositif de changement de pièce à usiner (400) le long de l'axe vertical pour saisir la pièce à usiner (WS) sur le dispositif de serrage de la table de machine (200), afin de permettre une préhension de la pièce à usiner (WS) serrée par le dispositif de serrage (220) de la table de machine (200) par la section de préhension (450) du dispositif de changement de pièce à usiner (400).

13. Machine-outil (1000) selon l'une quelconque des revendications précédentes, **caractérisée en ce que**
la section de préhension (450) comprend un mécanisme de levage (440) pouvant être commandé, par lequel la section de préhension (450) peut être déplacée en translation dans la direction de l'axe de rotation (410) du dispositif de changement de pièce à usiner (400), de sorte que la pièce à usiner (WS) peut être retirée du dispositif de serrage (220) de la table de machine (200) et/ou de l'emplacement de magasin (310) correspondant de la pluralité d'emplacements de magasin du magasin de pièces à usiner (300) et/ou la pièce à usiner (WS) peut être insérée dans le dispositif de serrage (220) de la table de machine (200) et/ou dans l'emplacement de magasin (310) correspondant de la pluralité d'emplacements de magasin du magasin de pièces à usiner (300).

14. Machine-outil (1000) selon l'une quelconque des revendications précédentes, **caractérisée en ce que**
le magasin de pièces à usiner (300) est réalisé sous forme de magasin à roues.
